# EUROPEAN PATENT SPECIFICATION

(11) **EP 4 414 810 B1**
(45) Date of publication and mention of the grant of the patent: **21.01.2026**
(21) Application number: 24154976.5
(22) Date of filing: 31.01.2024
(51) Int. Cl.: G06F 3/00, G06F 3/01, G06F 3/0482, G06F 3/04842

(54) **FACILITATING USER INTERFACE INTERACTIONS IN AN ARTIFICIAL REALITY ENVIRONMENT**
ERMÖGLICHUNG VON BENUTZERSCHNITTSTELLENINTERAKTIONEN IN EINER UMGEBUNG DER KÜNSTLICHEN REALITÄT
FACILITATION D'INTERACTIONS D'INTERFACE UTILISATEUR DANS UN ENVIRONNEMENT DE RÉALITÉ ARTIFICIELLE

(30) Priority: 08.02.2023 US 202318166282
(43) Date of publication of application: 14.08.2024
(73) Proprietor: Meta Platforms Technologies, LLC, Menlo Park, CA 94025 (US)
(72) Inventor: Levatich, Samuel Matthew, Menlo Park (US); Insley, Matthew Alan, Menlo Park (US); Johnson, Andrew C., Menlo Park (US); Xiong, Qi, Menlo Park (US); Edelblut, Jeremy, Menlo Park (US); Krenn, Matthaeus, Menlo Park (US); Jitkoff, John Nicholas, Menlo Park (US); Morrow, Jennifer, Menlo Park (US); Furtwangler, Brandon, Menlo Park (US)
(74) Representative: Murgitroyd & Company

(56) References cited:
- US-A1- 2020 387 287
- US-A1- 2020 388 247
- US-A1- 2022 121 344

## Description

### TECHNICAL FIELD

The present disclosure is directed to facilitation of interaction of a user in an artificial reality (XR) environment. More particularly, the disclosure relates to a system and a method for handling, using, or operating a system user interface (UI) rendered in the XR environment for facilitating UI interactions in an XR environment.

### BACKGROUND

Recent advancements in the field of artificial reality (XR) technology have led to development of various artificial reality platforms e.g., for user assistance and entertainment. Artificial reality content may include video, audio, haptic feedback, or some combination thereof, and any of which may be presented in a single channel or in multiple channels. Artificial reality can provide social connection where users may be able to virtually connect with friends in a three-dimensional environment, travel through space and time, play games in a completely new way, etc.

Conventionally, existing XR environments enable the users to view the content in various forms, such as via the virtual objects (for e.g., screens). However, interacting with the virtual object, such as a screen in the XR environment, may be a complex task for the users. For example, the user may find it difficult to interact with the virtual object as the user may be unable to physically touch the virtual object in a real world. Thus, the experience of using the virtual objects in conventional XR environments may be unsatisfactory and difficult for the users.

US2022121344A1 describes an electronic device adapted to enhance interactions with virtual objects in a three-dimensional environment. In some embodiments, an electronic device enhances interactions with selectable user interface elements. In some embodiments, an electronic device enhances interactions with slider user interface elements. In some embodiments, an electronic device moves virtual objects in a three-dimensional environment and facilitates accessing actions associated with virtual objects.

### SUMMARY OF INVENTION

In accordance with the invention in a first aspect, there is provided a computer implemented method for facilitating user interface (UI) interactions in an artificial reality (XR) environment in accordance with the claims appended hereto.

In some embodiments, the signifying the interaction opportunity includes the generating the first feedback; and the first feedback further comprises increasing an amount of the surface of the system UI covered by the UI element of the set of UI elements.

In some embodiments, the signifying the interaction includes the causing the location of the representation of the user's hand to be modified; and the causing the location of the representation of the user's hand to be modified includes, in response to determining that the representation of the user's hand is pressing the UI element past the surface of the system UI, preventing the UI element from extending below the the surface of the system UI.

In some embodiments, the signifying the interaction includes the causing the location of the representation of the user's hand to be modified; and in response to the determining that the position of the user's hand has interacted with the UI element, further accentuating the UI element by changing a coloring or shading of the UI element.

In some embodiments, the UI element is a button UI element; the signifying the interaction comprises the causing a location of the representation of the user's hand to be modified; and the method further comprises, in response to determining that the user's hand has A) interacted with the button UI element pushing it down past a first depression threshold and B) then has interacted with the button UI element releasing it up past a second depression threshold, causing activation of the button UI element, wherein the first depression threshold is closer to the surface of the system UI than the second depression threshold.

In some embodiments, the causing activation of the button UI element includes outputting an audio cue.

In some embodiments, the signifying the interaction includes generating the third feedback; and the third feedback that accentuates at least the portion of the representation of the user's hand accentuates at least a thumb and one or more fingers of the representation of the user's hand that is grabbing the system UI.

In accordance with the invention in a second aspect, a computing system for interacting with a system user interface (UI) in an artificial reality (XR) environment in is provided accordance with the claims appended hereto.

For example, in accordance with the invention in the second aspect, a computing system for interacting with a system user interface (UI) in an artificial reality (XR) environment comprises: one or more processors; and one or more memories storing instructions that, when executed by the one or more processors, cause the computing system to perform a process comprising the computer implemented method of the first aspect. Preferred features of each aspect will be understood to apply to the other by analogy.

In some embodiments, the signifying the interaction with the system UI or the UI element comprises the generating the third feedback by accentuating the edge of the system UI when at least the portion of the representation of the user's hand is grabbing the system UI.

In some embodiments, the instructions are such that, when executed by the one or more processors, the accentuation, of the portion of the edge of the system UI, A) begins when the representation of the user's hand is within a threshold distance of the edge of the system UI and B) increases in an amount of the edge that is accentuated as the distance between the portion of the representation of the user's hand and the portion of the edge of the system UI is decreased.

In some embodiments, the signifying the interaction opportunity comprises the generating the second feedback; and the second feedback further comprises accentuating, based on a determined decrease in the distance between the portion of the representation of the user's hand and the system UI, a portion of the representation of the user's hand including at least a thumb and one or more fingers on the representation of the user's hand.

In some embodiments, the tracking of the position of the user's hand in relation to the system UI and/or the set of UI elements is based on at least one of: one or more sensors that detect gestures of the user's hand in real-time or one or more controllers associated with the XR device, and the location of the representation of the user's hand corresponds to the location of the user's hand in a real-world environment.

In some embodiments, the signifying the interaction includes the causing the location of the representation of the user's hand to be modified; and the causing the location of the representation of the user's hand to be modified includes, in response to determining that the representation of the user's hand is pressing the UI element past the surface of the system UI, preventing the UI element from extending below the the surface of the system UI.

In some embodiments, the signifying the interaction includes the causing the location of the representation of the user's hand to be modified; and in response to the determining that the position of the user's hand has interacted with the UI element, further accentuating the UI element by changing a coloring or shading of the UI element.

In some embodiments, the UI element is a button UI element; the signifying the interaction comprises the causing a location of the representation of the user's hand to be modified; the process further comprises, in response to determining that the user's hand has A) interacted with the button UI element pushing it down past a first depression threshold and B) then has interacted with the button UI element releasing it up past a second depression threshold, causing activation of the button UI element; and the first depression threshold is closer to the surface of the system UI than the second depression threshold.

In some embodiments, the causing activation of the button UI element includes outputting an audio cue.

In some embodiments, the signifying the interaction includes the generating the third feedback; and
In some embodiments, the third feedback that accentuates at least the portion of the representation of the user's hand accentuates at least a thumb and one or more fingers of the representation of the user's hand that is grabbing the system UI.

In accordance with the invention in a third aspect, a computer-readable storage medium is provided in accordance with the claims appended hereto.

For example, in accordance with the invention in the third aspect, a computer-readable storage medium is provided storing instructions that, when executed by a computing system, cause the computing system to perform a process comprising the computer implemented method of the first aspect or the process steps performed by the system of the second aspect. Preferred features of each aspect will be understood to apply to the others by analogy.

In some embodiments, the signifying the interaction includes the generating the third feedback; and the third feedback that accentuates at least the portion of the representation of the user's hand accentuates at least a thumb and one or more fingers of the representation of the user's hand that is grabbing the system UI.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5A is a conceptual diagram illustrating an exemplary environment for facilitating interaction of a user with a system user interface (UI) in an artificial reality (XR) environment.
Figure 5B is a conceptual diagram illustrating first feedback corresponding to a UI element for facilitating user interface interaction in the XR environment.
Figure 5C is a conceptual diagram representing second feedback corresponding to accentuation of a portion of an edge of the system UI.
Figure 6 is a conceptual diagram illustrating interaction of a user's hand with a UI element of the system UI.
Figures 7A and 7B are conceptual diagrams that collectively illustrate an example of activation of the UI element of the system UI.
Figure 8A is a conceptual diagram illustrating accentuation of a portion of the edge of the system UI based on proximity of a position of the user's hand.
Figure 8B is a conceptual diagram representing the accentuation of the edge completely and representation of the user's hand based on grabbing of the edge.
Figure 9A is a flow diagram illustrating a method used in some implementations of the present technology for interaction of the user with the UI element in the XR environment.
Figure 9B is a flow diagram illustrating a method used in some implementations of the present technology for interaction of the user with the system UI in the XR environment.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure are directed to facilitating user interface interactions in an artificial reality (XR) environment. An interaction facilitation system may be provided to facilitate the user interface interaction in the XR environment. A system user interface (UI) may be rendered in the XR environment, in order to facilitate interactions in the XR environment. The interaction facilitation system can facilitate an effective immersive interaction of the user with the system UI in the XR environment similar to an interaction of the user with devices in a physical environment. For the immersive experience of the user, the system UI or UI elements of the system UI may be modified based on the interaction between the user and the system UI in the XR environment.

In an exemplary scenario, a user may utilize the XR environment for a wide ranges of applications, such as entertainment, healthcare, automotive, education, social and relationship connections, etc. For example, the system UI may be utilized as a medium to access various applications, such as viewing content, browsing internet, connecting with other users, accessing system controls, and so forth in the XR environment. The interaction facilitation system may receive an input, from the user via an XR device, to open the system UI. The interaction facilitation system can render the system UI in the XR environment based on the received input. Furthermore, the interaction facilitation system can track the position of the user's hand in relation to the system UI and/or a UI element of a set of UI elements of the system UI. The tracking may be performed to determine the actual position and/or gestures of the user's hand in the physical world.

In an embodiment, the user may perform the gesture of moving the hand close to the UI element. Based on a determination that the tracked position of the user's hand is within a first threshold distance of the UI element, the interaction facilitation system can generate a first feedback that modifies the UI element, prior to activation of the UI element. The first feedback includes extending the UI element above a surface of the system UI. Such first feedback may signify an interaction opportunity of the user with the UI element. In another embodiment, the user may perform the gesture of moving the hand close to an edge of the system UI (e.g., to grab the system Ul). Based on a determination that the tracked position of the user's hand is within a second threshold distance of the edge of the system UI, the computing system may generate a second feedback that accentuates at least a portion of the edge of the system UI. Such second feedback may signify an interaction opportunity of the user with the system UI. Therefore, the computing system enables the user to easily identify the interaction opportunities with the system UI and the UI elements of the system UI for an immersive and effective user experience.

Further, the computing system may update a position of the user's hand in relation to the system UI and/or the set of UI elements. In response to determining that the position of the user's hand has interacted with the UI element, the computing system causes a location of a representation (rendered in the XR environment) of the user's hand to be modified from directly tracking the real-world location of the user's hand to a position that is based on both the real-world location of the user's hand and a location of the UI element. For example, the interaction facilitation system can initially have the representation of the user's hand match (as close as the system is able) the real-world position of the user's hand. Then, following the determination that the position of the user's hand has interacted with the UI element, the representation of the user's hand is attached to the UI element such that the user's real-world hand moving only a threshold amount away from the UI element doesn't cause the representation of the user's hand to move off the UI element. Moreover, when the position of the user's hand has interacted with the UI element (e.g., by pressing down the UI element) causing the UI element to be activated, the interaction facilitation system can further provide an audio cue. Such a modification signifies the activation of the UI element to the user.

Furthermore, in response to determining that the position of the user's hand includes the gesture that grabs the edge of the system UI, i.e., the system UI is grabbed by the user, the interaction facilitation system can generate third feedback that accentuates at least a portion of the representation of the user's hand that is grabbing the system UI. Moreover, the interaction facilitation system can accentuate the complete edge of the system UI when grabbed by the user. Such third feedback may signify the interaction of the system UI to the user. Thus, the interaction facilitation system enables generation of visual and/or audio feedbacks corresponding to the system UI and the UI elements that clearly distinguish the selected UI elements, activated UI elements and grabbing of the system UI similar to a device being grabbed in the physical world by the user, thereby providing a user friendly and enhanced interactive experience.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

The term "accentuate" used herein, may refer to modification, such as highlighting of a feature and/or a quality of a virtual object that makes the virtual object noticeable in the XR environment. For instance, in the present disclosure, the accentuation of an edge of the system UI, the UI element or a portion of a representation of a user's hand in the XR environment may change a size, shading, coloring, position, etc. of a UI element. This can thereby signify an interaction or potential interaction with a visual modification e.g., in an appearance of the edge of the system UI, the UI element, or the portion of the representation of the user's hand. For example, the visual modification can make the edge and the UI element more noticeable to the user. Moreover, the visual modification in the portion of the representation of the user's hand may indicate that the highlighted portion is interacting with the virtual object, or the highlighted portion may be near the virtual object in the XR environment.

The term "system user interface (Ul)" used herein, may refer to a virtual user interface (UI) that allows users to interact with virtual objects, environments, or information in the physical or virtual space. The system UI may include a set of UI element or a feature element that may be used to depict certain features. For example, the system UI may provide system controls for the artificial reality device, system notifications, XR navigation controls, flat-panel applications such as a browser or messaging interface, social media interfaces, etc. The system UI may be a migrating UI (for example, similar to an electronic tablet in physical world), such that it can be moved from one position to another position in the XR environment with respect to the user. The system UI may be a 2-dimensional (2D) UI or a 3-dimensional (3D) UI.

Conventional XR systems enable a user to interact in XR environments, for example, with virtual objects. However, interacting with virtual objects, such as a system user interface (UI) in the XR environment may be a complex task for the users. For example, the user may find it difficult to interact with the system UI in the XR environment, since there may be limited haptic feedback, controls may be small or difficult to target, or the user may find it difficult to determine what actions can be take or what portions of the system UI she can interact with. Thus, the user experiences, using conventional systems, of interaction with the virtual objects, such as the system UI, become unsatisfactory. In order to make the interaction more immersive than the conventional systems, the interaction facilitation system of the present disclosure provides immersive engagement for the users for interaction with the system UI in the XR environment. The interaction facilitation system can output various feedbacks relating to the interaction between the user and the system UI and/or one or more components of the system UI (e.g., an edge of the system UI and the UI elements of the system Ul). For example, the interaction facilitation system can output a feedback that includes accentuation of the edge of the system UI that can cause the user to understand that an interaction with the system UI is possible. Moreover, the interaction facilitation system can enable accentuation of the representation of the user's hand in the XR environment that grabs the system UI that may provide a feel of holding or grabbing the system UI as that of the real or physical world. Furthermore, the interaction facilitation system can enable accentuation and/or elevation of the UI element that the user is interacting with, to clearly make the selected UI element visible to the user and further signify that an interaction is available. Thus, the interaction facilitation system of the present disclosure provides satisfactory and user friendly XR environment interaction experience to the users.

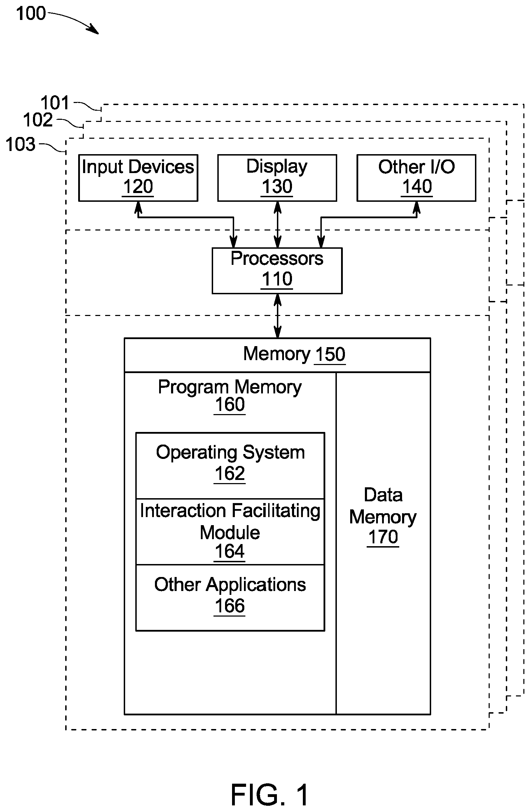

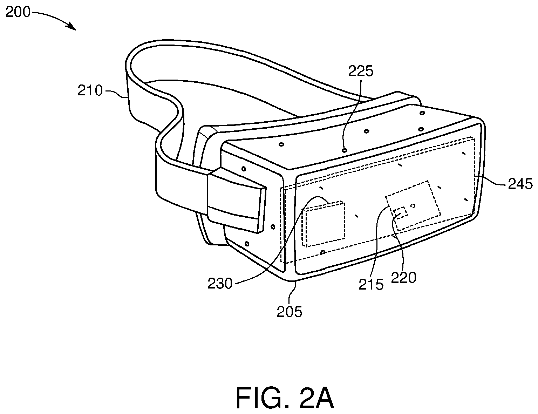

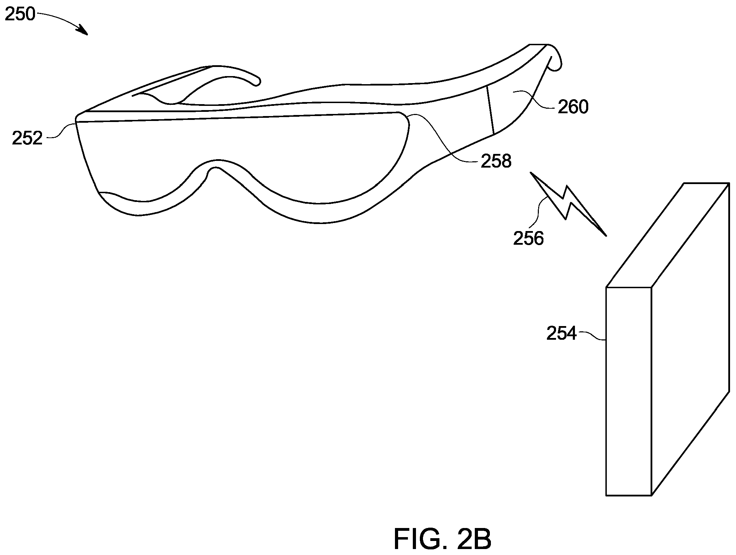

Several implementations are discussed below in more detail in reference to the figures. Figure 1 is a block diagram illustrating an overview of devices on which some implementations of the disclosed technology can operate. The devices can comprise hardware components of a computing system 100 that may facilitate artificial reality environment user interface interaction. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, girds, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, interaction facilitating module 164, and other application programs 166. Memory 150 can also include data memory 170 that can include, e.g., positional data of the system UI, positional data of the user's hand, interaction input data configuration data, settings, user options or preferences, etc., which can be provided to the program memory 160 or any element of the computing system 100.

The interaction facilitating module 164 may be configured to facilitate interaction between a user and a system UI and/or UI element in an XR environment. To facilitate the interaction between the system UI and/or UI element, the interaction facilitating module 164 may perform various functions such as rendering the system UI in the XR environment, tracking a position of the user's hand, signifying an interaction opportunity with the system UI or the UI element, updating position of the user's hand relating to the system UI, and signifying interaction with the system UI or the UI element.

In order to signify some interaction opportunities with the UI element, the interaction facilitating module 164 may generate first feedback that modifies the UI element prior its activation, based on the position of the user's hand. In order to signify other interaction opportunities with the system UI, the interaction facilitating module 164 may further generate second feedback that accentuates at least a portion of an edge of the system UI.

In order to signify the interaction with the UI element, the interaction facilitating module 164 may causing a location of a representation of the user's hand to be modified, based on a determination that the position of the user's hand has interacted with the UI element. In order to signify the interaction with the system UI, the interaction facilitating module 164 may generate third feedback that accentuates a portion of the representation of the user's hand based on a determination that the user's hand is grabbing the system UI.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200, in accordance with some embodiments. The HMD 200 includes a front rigid body 205 and a band 210. The front rigid body 205 includes one or more electronic display elements of an electronic display 245, an inertial motion unit (IMU) 215, one or more position sensors 220, locators 225, and one or more compute units 230. The position sensors 220, the IMU 215, and compute units 230 may be internal to the HMD 200 and may not be visible to the user. In various implementations, the IMU 215, position sensors 220, and locators 225 can track movement and location of the HMD 200 in the real world and in an artificial reality environment in three degrees of freedom (3DoF) or six degrees of freedom (6DoF). For example, the locators 225 can emit infrared light beams which create light points on real objects around the HMD 200. As another example, the IMU 215 can include e.g., one or more accelerometers, gyroscopes, magnetometers, other non-camera-based position, force, or orientation sensors, or combinations thereof. One or more cameras (not shown) integrated with the HMD 200 can detect the light points. Compute units 230 in the HMD 200 can use the detected light points to extrapolate position and movement of the HMD 200 as well as to identify the shape and position of the real objects surrounding the HMD 200.

The electronic display 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

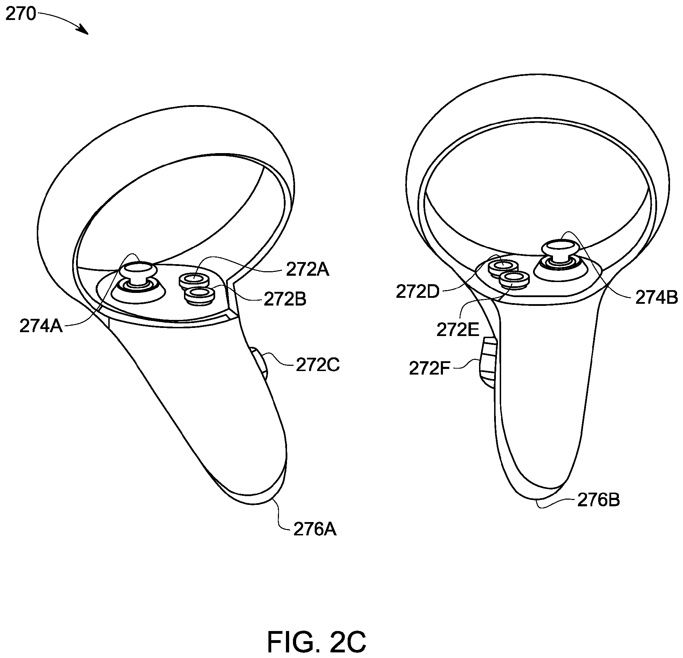

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

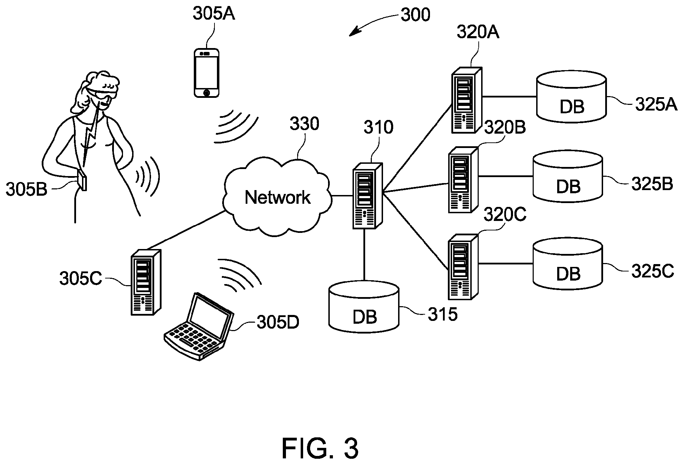

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

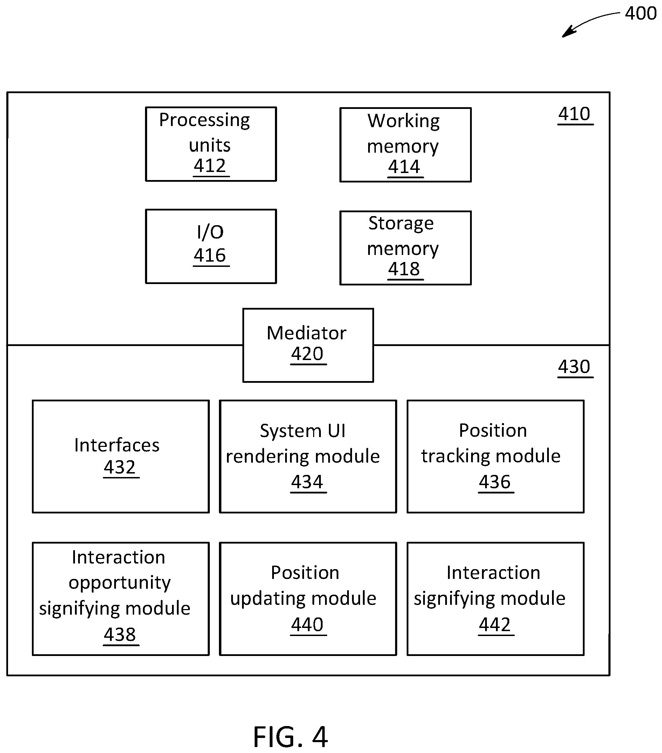

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for facilitating user interface interaction in the XR environment. Specialized components 430 can include a system UI rendering module 434, a position tracking module 436, an interaction opportunity signifying module 438, a position updating module 440, an interaction signifying module 442 and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

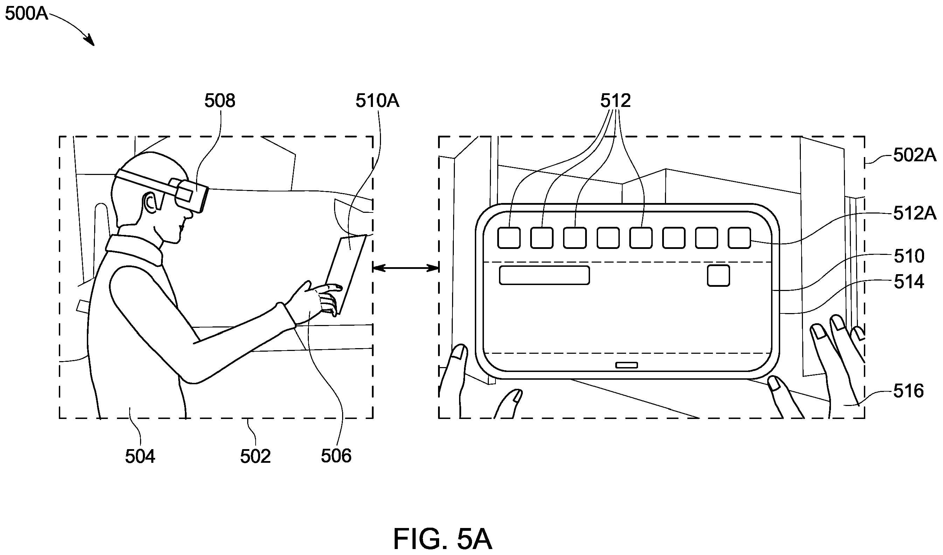

The system UI rendering module 434 may be configured to render the system UI in the XR environment. The system UI may be rendered in the XR environment in such a way that the system UI is at an eye level of the user. Further, the system UI may also be rendered at a distance from the user such that the system UI is easily accessible for the user in the XR environment. Details of the rendering of the system UI in the XR environment are further provided, for example, in Figure 5A.

The position tracking module 436 may be configured to track a position of the user's hand relating to the system UI and/or the set of UI elements of the system UI. The tracking of the position is performed in order to determine the actual position and/or gestures of the user's hand in a real world environment. For example, the tracking of the position may be performed based on input data received using one or more sensors (e.g., cameras) on an XR device (for example, the HMD 200 or 250) and/or a device worn by the user such as a wristband or glove. Further, the position tracking module 436 may also receive the input data based on the controllers 270 associated with the XR device. Details of the tracking of the position of the user's hand are further provided, for example, in Figure 5A.

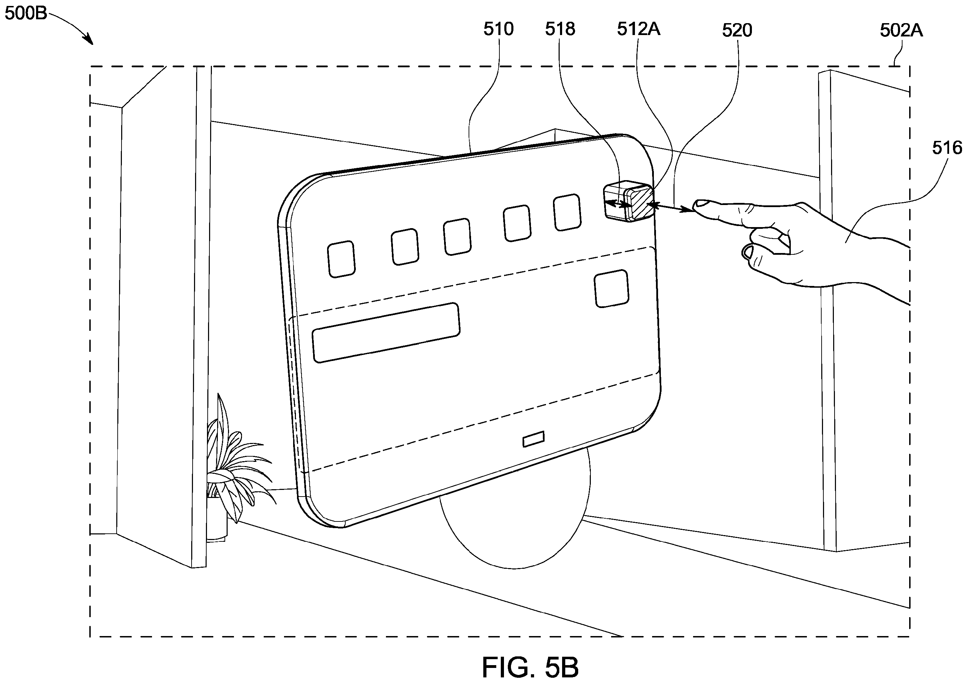

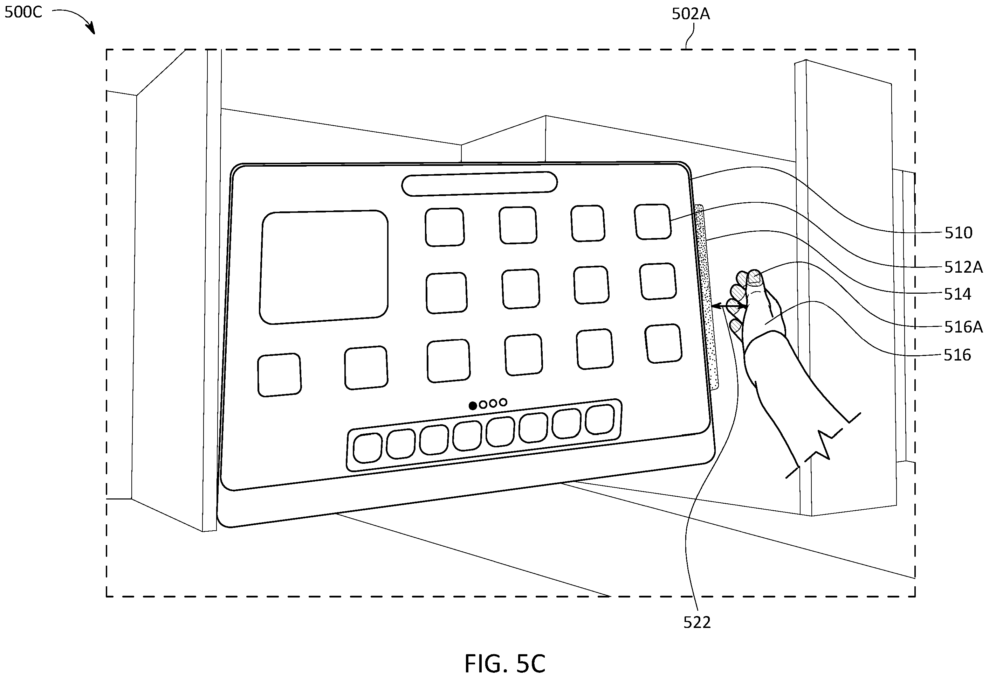

The interaction opportunity signifying module 438 may be configured to signify interaction opportunities between the position of the user's hand and the system UI and/ or UI element of the set of UI elements. For example, the interaction opportunity to grab the system UI may be signified based on the position of the user's hand being within a threshold distance from the edge of the system UI. In another example, the interaction opportunity to select the UI element may be signified based on the position of the user's hand being within a threshold distance from a UI element of the set of UI elements. Details of signifying of the interaction opportunity with the system UI or the UI element is further provided, for example, in Figure 5B and Figure 5C.

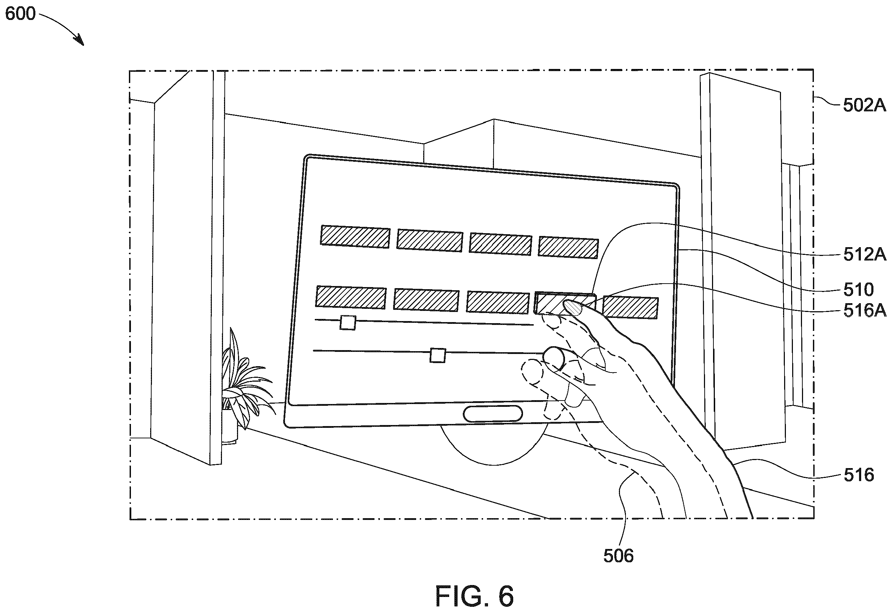

The position updating module 440 may be configured to update position related information of the user's hand in relation to the system UI and/or the set of UI elements in the XR environment. For example, a position of representation of the user's hand may be updated based on tracked positional data of the user's hand in the real world environment. The positional data of the user's hand may be tracked using the position tracking module 436, e.g., based on the one or more sensors on the XR device (for example, the HMD 200 or 250), wearables, or the controllers 270 associated with the XR device. Details of updating the position of the user's hand are further provided, for example, in Figure 6.

The interaction signifying module 442 may be configured to signify the interaction between the position of the user's hand and the system UI and/or UI element. For example, the interaction between the UI element and the user's hand may be signified based on modification of the location of the representation of the user's hand from directly tracking the real-world location of the user's hand to the position that is based on both the real-world location of the user's hand and the location of the UI element. In another example, the interaction between the system UI and the user's hand may be signified based on generation of the third feedback that accentuates the portion of the representation of the user's hand based on the determination that the user's hand is grabbing the system UI. Details of signifying the interaction with the system UI or the UI element are further provided, for example, in Figure 6.

Those skilled in the art will appreciate that the components illustrated in Figures 1-4 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 5A is a conceptual diagram illustrating an exemplary environment 500A for facilitating interaction of a user with a system user interface (UI) in the XR environment. The environment 500A may include a real world environment 502 that may include a user 504 that may be wearing an XR device 508. Further, the environment 500A may include an XR environment 502A that comprises a system UI 510 rendered in the XR environment 502A. The system UI 510 may include UI element 512A of set of the UI elements 512 and an edge 514 of the system UI 510. Further, the XR environment 502A may also include a representation 516 of the user's hand 506. The real world environment 502 and the XR environment 502A may occupy the same physical space, i.e., user movements in the real world environment 502 can cause corresponding changes, such as to the user's viewpoint, in the XR environment 502A. For example, an overlay representation 510A of a system UI 510 is also depicted in the real world environment 502, illustrating how the position of the system UI 510 exists relative to the real-world environment 502. In some cases, the XR environment 502A may be a mixed reality or augmented reality environment, where the user can see the overlay representation 510A of the system UI 510 rendered in conjunctions with the real world 502. For example, the user 504 may be able to view the overlay representation 510A of the system UI can be rendered in the XR environment 502A via the XR device 508 while the user can see the real world environment 502. In other cases, the XR environment can be a virtual environment where what the user sees is completely computer generated. Thus, the overlay representation 510A of the system UI 510 can be not visible in conjunction with the real world environment 502, but instead is rendered into the virtual space in which the user is moving while also moving in the real world.

The XR device 508 may be a wearable device that may be used by the user 504 (for example, a person wearing the XR device 508) to interact with the system UI 504 in the XR environment 502A. The XR device 508 may be a physical device, such as including a head-mounted display (HMD) connected to a host computer system, a standalone HMD, a mobile device or computing system, or any other hardware platform capable of providing artificial reality content. For example, the XR device 508 may be the virtual reality head-mounted display (HMD) 200, as explained, for example, in Figure 2A and/or the mixed reality HMD system 250 as explained, for example, in Figure 2B. The XR device 508 may have one or more sensors that can track the position of a user's hand 506 and/or that can also detect gestures of the user's hand 506 in real time. For example, a position of the representation 516 of the user's hand 506 may be updated in the XR environment 502A based on the tracking of the position of the user's hand 506 in the real world environment 502. Further, the tracking of the position of the user's hand 506 may also be performed using controllers 270 (e.g., hand controller), for example, explained in Figure 2C associated with the XR device 508 or a controller can be a wearable device, which may include self-tracking capabilities similar to those of HMD 200 or 250 or may have a design, emit lighting, or other signals that enable tracking of the controller by HMD 200 or 250.

In one implementation, the system UI 510 may be rendered in the XR environment 502A. The system UI 510 may be a 2D user interface (UI) or a 3D UI that is rendered in front of the user 504 in the XR environment 502A. The system UI 510 may be used to interact with virtual objects, environments, or information on the physical and/or virtual world. More particularly, the system UI 510 may be any UI through which the interaction between users and the XR environment 502A may occur. The system U I 510 may receive one or more inputs from the user 504 via the XR device 508 and provide an output based on the received input from the user 504. The system UI 510 may be one of, for example, composite user interface (CUI), and/or multimedia user interface (MUI), and/or the like.

In one implementation, the system UI 510 may include the UI element 512A of the set of the UI elements 512. The set of the UI elements 512 maybe visual elements that can be seen on the system UI 510. For example, the set of UI elements may be icons, buttons, menus, text fields, progress bars, images, drawings, animations, and so forth. The set of UI elements enables utilization of the system UI 510 by the users for various purposes for example, browsing a website or accessing an application. The set of UI elements may be of any shape and size.

Further, the edge 514 may depict a periphery of the system UI 510. The edge 514 may appear and disappear based on the proximity of the position of the user's hand 506 from the system UI 510. For example, the edge 514 may start accentuating based on proximity of the position of the user's hand 514 being within a threshold distance i.e., a portion of the edge 514 may accentuate when the representation 516 of the user's hand 506 is within a second threshold distance from the edge 514 of the system UI 510. Further, the accentuated portion of the edge 514 increases as the representation 516 of the user's hand 506 approaches towards the edge 514 of the system UI 510. Details of the accentuation of the edge 514 are further explained, for example, in Figure 5C.

Figure 5B is a conceptual diagram 500B illustrating first feedback corresponding to the UI element 512A for facilitating user interface interaction in the XR environment 502A. The XR environment 502A may include the system UI 510. The system UI 510 may include the UI element 512A. The XR environment 502A may further include the representation 516 of the user's hand 506.

The computing system may be configured to determine the position of the user's hand 506 in the real world 502. In an example, the position of the user's hand 506 (depicted as the representation 516 of the user's hand 506 in the XR environment 502A) is within a first threshold distance 520 of the UI element 512A. In response to determining that the position of the user's hand 506 is within the first threshold distance 520 of the UI element 512A, the computing system may generate first feedback that may modify the UI element 512A, prior to activation of the UI element 512A. For example, the first feedback may include extending the UI element 512A by a first height 518 above a surface of the system UI 510 toward the user's hand 506. Such first feedback may signify the interaction opportunity of the user 504 with the UI element 512A. At such an instance, an actual interaction between the UI element 512A and the position of the user's hand 506 is not performed. For example, the first threshold height 518 is a height at which the UI element 512A may elevate above the plane of the system UI 510 to depict that at least a finger of the user's hand 506 is close to the UI element 512A and the UI element 512A may be selected with a user interaction, such as pressing on the element 512A. Such extending of the UI element 512A may be understood by the user 504 as an indication that the UI element 512A, of the set of UI elements, may be selected. In an exemplary scenario, the first threshold height 518 may be "0.01" meters, i.e., the UI element 512A may extend by "0.01" meters above the surface of the system U1510.

In some embodiments, the first feedback may further include increasing an amount of the surface of the system UI 510 that may be covered by the UI element 512A of set of UI elements. For example, increasing the surface may correspond to enlarging an original size of the UI element 512A to a size that may be greater the original size of the UI element 512A, such that after increase in the surface, the UI element 512A may be visually differentiated from other UI elements of the set of UI elements. Such first feedback may signify the interaction opportunity of the user 504 with the UI element 512A. At such an instance, the actual interaction between the UI element 512A and the position of the user's hand 506 is not performed.

Figure 5C is a conceptual diagram 500C representing second feedback corresponding to accentuation of a portion of the edge 514 of the system UI 510. The conceptual diagram 500C may include the XR environment 502A. The XR environment 502A may include the system UI 510 and the representation 516 of the user's hand 506.

The computing system may be configured to determine the position of the user's hand 506 in the real world 502. In an example, the position of the user's hand 506 (depicted as the representation 516 of the user's hand 506 in the XR environment 502A) is within a second threshold distance 522 of the edge 514 of the system UI 510. In response to determining that the position of the user's hand 506 is within the second threshold distance 522 of the edge 514 of the system UI 510, the computing system may generate the second feedback. For example, the second feedback may include accentuating at least a portion of the edge 514 of the system UI 510. For example, the accentuating can include changing a coloring, shading, size, opaqueness, etc. Such second feedback may signify the interaction opportunity of the user 504 with the edge 514 of the system UI 510. At such an instance, an actual interaction between the edge 514 of the system UI 510 and the position of the user's hand 506 is not performed.

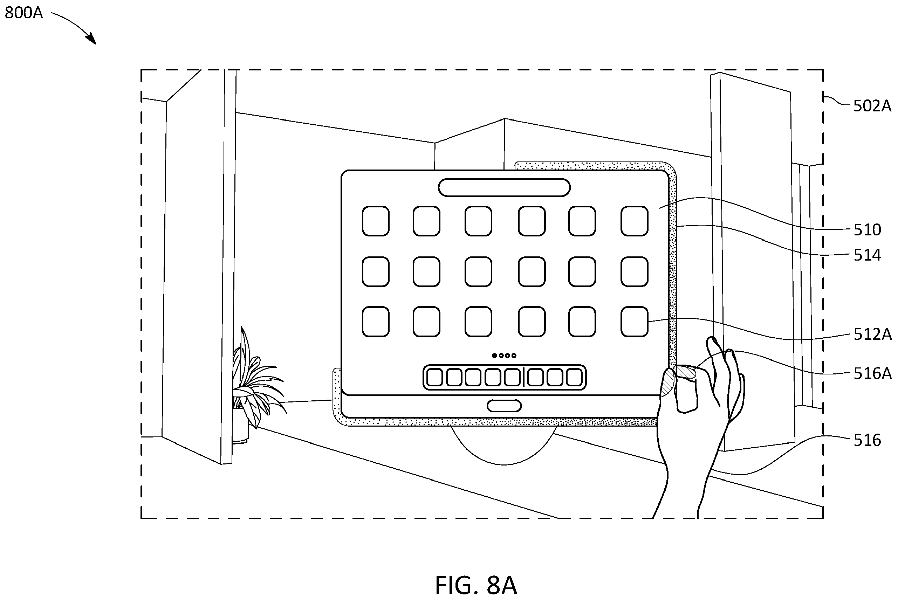

In some embodiments, the accentuation of the portion of the edge 514 may be of any size. Further, the size of the accentuated portion may increase and/or decrease based on proximity of the position of the user's hand 506 within the second threshold distance 522 with the edge 514 of the system UI 510. Details of the accentuated portion of the edge 514 are further provided, for example, in Figure 8A.

The second feedback may further include accentuating a portion of the representation 516 of the user's hand 506. For example, the accentuating can include changing a coloring, shading, size, opaqueness, etc. The portion may include at least one of a thumb or one or more fingers of the representation 516 of the user's hand 506. Moreover, the second feedback may further include increasing an amount of the accentuated portion of at least one of the thumb or one or more fingers of the representation 516 of the user's hand 506 based on decrease in the distance between the portion of the representation 516 of the user's hand and the system UI 510. For example, the portion of the representation 516 of the user's hand 506 (such as tip of the thumb and the one or more fingers) may start accentuating gradually based on the position of the user's hand 506 being within the second threshold distance 522 and as the user's hand 506 approaches towards the system UI 510, the accentuated portion of the representation 516 of the user's hand 506 or intensity of the accentuation may start to increase. Further, accentuation of the portion 516A of the representation 516 of the user's hand 506 may depend on a portion of the representation 516 included in the grab gesture. For example, the user 504 may use the thumb and the index finger to grab the edge 514 of the system UI 510. In such a case, the portion 516A corresponding to the thumb and the index finger in the representation 516 of the user's hand 506 that is in contact with the edge 514 of the system UI 510 may be accentuated. In another example, the user 504 may use the thumb, and all four fingers to grab the edge 514 of the system UI 510. In such a case, the portion 516A corresponding to the thumb and the all the four fingers in the representation 516 of the user's hand 506 that is in contact with the edge 514 of the system U I 510 may be accentuated.

Figure 6 is a conceptual diagram 600 illustrating interaction of the user's hand 506 with the UI element 512A of the system UI 510. The conceptual diagram 600 may include the XR environment 502A. The XR environment 502A may include the system U I 510 and the representation 516 of the user's hand 506. The XR environment 502A further shows a position of the user's hand 506 in the real world environment 502, as compared to the position of the representation 516 of the user's hand 506 in the XR environment 502A.

The computing system may be configured to update the position of the user's hand 506 in relation to the system UI 510 and/or the set of UI elements 512A. The position of the user's hand 506 may be updated in the XR environment 502A based on the tracking of the position of the user's hand 506 in the real world environment 502. The updated position of the user's hand 506 may be depicted as the representation 516 of the user's hand 506.

The computing system may be further configured to determine that the position of the user's hand 506 has interacted with the UI element 512A, based on the updated position of the user's hand 506. In response to determining that the position of the user's hand 506 has interacted with the UI element 512A, the computing system may cause to modify a location and/or position of the representation 516 of the user's hand 506. A location of the representation 516 of the user's hand 506 may be modified from directly tracking the real-world location of the user's hand 506 to a position that is based on both the real-world location (such as the location in the real world environment 502) of the user's hand 506 and a location of the UI element 512A in the XR environment 502A. For example, the computing system initially matches the representation 516 of the user's hand 506 closely with the real-world position of the user's hand 506. Based on the determination that the position of the user's hand 506 has interacted with the UI element 512A, the representation 516 of the user's hand 506 is attached (or stuck) to the UI element 512A. The sticking is such that when the user's hand 506 moves in the real-world only a threshold amount away from the UI element 512A, it doesn't cause the representation 516 of the user's hand 506 to move off the UI element 512A.

In an implementation, in order to interact with the UI element 512A, the user 504 may require pressing the UI element 512A. The computing system may be further configured to determine that the representation 516 of the user's hand 506 is pressing the UI element 512A past the surface of the system UI 510. In response to determining that the representation 516 of the user's hand 506 is pressing the UI element 512A past the surface of the system UI 510, the computing system may prevent the UI element 512A from extending below the surface of the system UI 510. For example, in a situation when the user 504 may try to press the UI element 512A that is extended by the first height 518 (as explained, for example, in Figure 5B) past the surface of the system UI 510, the computing system may prevent the movement of the UI element 512A below the surface and/or plane of the system UI 510. In some cases, the position of the representation of the user's hand may be modified to not exactly track the real world location of the user's hand, such that the representation of the user's hand also does not pass through the surface of the system UI 510.

Furthermore, in another implementation, in response to the determining that the position of the user's hand 506 (depicted as the representation 516 in the XR environment 502A) may have interacted with the UI element 512A, the computing system may accentuate the UI element 512A. For example, the accentuation of the UI element 512A may include changing a coloring, shading size, opaqueness, etc., of the UI element 512A. Further, one or more portions of the representation 516 of the user's hand 506 that are in contact with the UI element 512A may also be accentuated with a change in color, shading, size, opaqueness, etc.

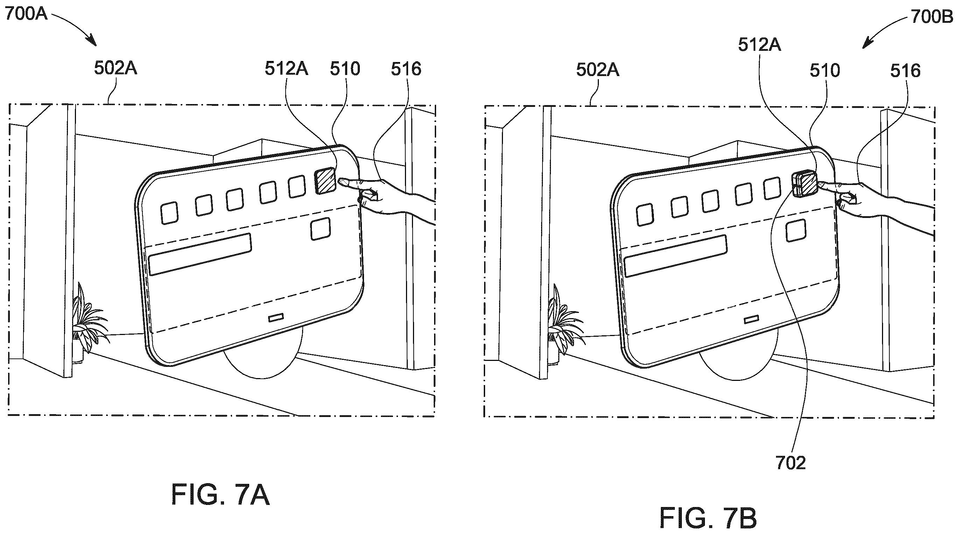

Figures 7A and 7B are conceptual diagrams that collectively illustrate activation of the UI element 512A of the system UI 510. Figure 7A depicts a diagram 700A that includes a first step of activation of the UI element 512A. The diagram 700A may include the XR environment 502A. The XR environment 502A includes the system UI 510 and the representation 516 of the user's hand 506.

In one implementation, the UI element 512A may be a button UI element (as explained, for example in Figure 5A) that may be activated. The activation may be performed by the computing system in response to determining that the user's hand 506 (depicted as the representation 516 in the XR environment 502A) has interacted with the UI element 512A by pushing the UI element 512A down past a first depression threshold as the first step, and release it up past a second depression threshold as a second step. The second step is depicted in Figure 7B.

Figure 7B depicts a diagram 700B that includes the second step of activation of the UI element 512A. The diagram 700B may include the XR environment 502A. The XR environment 502A includes the system UI 510 and the representation 516 of the user's hand 506. The UI element 512A may be released up past a second depression threshold 702 after the interaction with the UI element 512A.

In an exemplary scenario, the computing system may extend the UI element 512A by 0.01 meters, after the position of the user's hand 506 is determined to be within the first threshold distance 520. In such a case, to activate the UI element 512A, the user may push the UI element 512A by the first depression threshold such that the UI element 512A becomes coplanar or nearly coplanar with the surface of the system UI 510, and release the UI element 512A such that the UI element 512A may come up past the second depression threshold 702 (for example, 0.002 meters). Moreover, the first depression threshold is closer to the surface of the system UI 510 than the second depression threshold 702. For example, the UI element 512A becomes coplanar or nearly coplanar with the surface of the system UI 510 when the UI element 512A is pushed down past the first depression threshold, and the UI element 512A is elevated when the UI element 512A is released more than the second depression threshold 702. After releasing the UI element 512A past the second depression threshold 702, the computing system may activate the UI element 512A.

In another implementation, the computing system may output an audio cue in response to the activation of the UI element 512A. For example, the audio cue may be output after the release of the UI element 512A past the second depression threshold 702. The audio cue may be output via the XR device 508. For example, the audio cue may be a sound of a click indicating activation of the UI element 512A. In some embodiments, the sound for the audio cue may be selected by the user 504.

In another implementation, the computing system may output one or more feedback in response to the activation of the UI element 512A. For example, the feedback may include audio or visual feedback, such as, the activated UI element 512A may be accentuated (highlighted with another color to show the activation) and/or an audio cue may be output to indicate the activation of the UI element 512A.

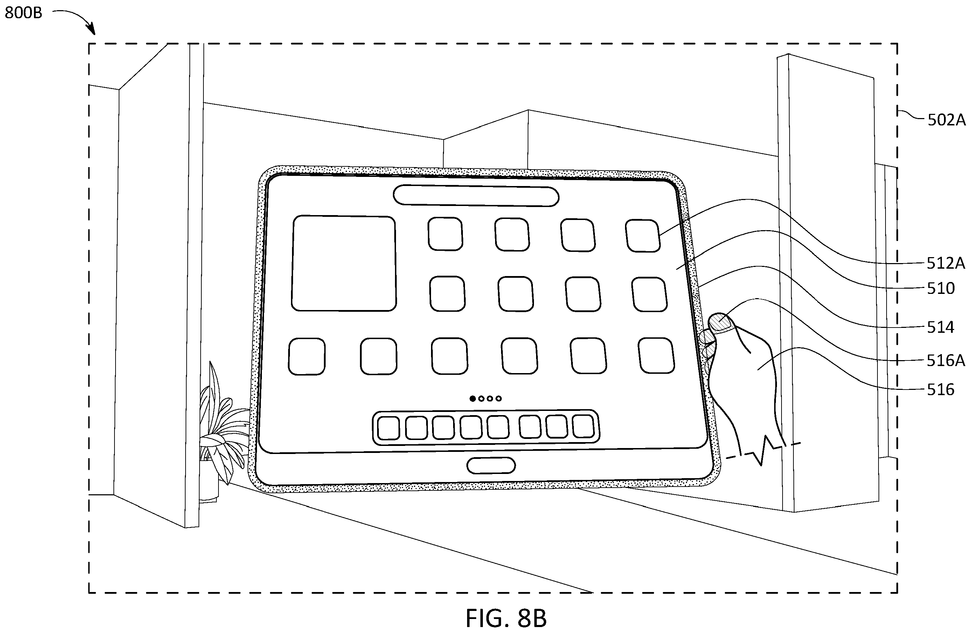

The computing system may further accentuate the edge 514 of the system UI 510. The edge 514 may be accentuated based on the determination that the position of the user's hand 506 is in proximity of the edge 514 of the system UI 510, or the edge 514 is being grabbed by the user's hand 506. The accentuation of the edge 514 of the system UI 510 based the proximity of the position of the user's hand 506 and the grabbing of the edge 514 of the system UI 510 is further described in Figure 8A and Figure 8B.

Figure 8A is a conceptual diagram 800A illustrating accentuation of the portion of the edge 514 of the system UI 510 based on proximity of the position of the user's hand 506. The conceptual diagram 800A may include the XR environment 502A. The XR environment 502A may include the system UI 510. The system UI 510 may further include the edge 514. The XR environment 502A may further include the representation 516 of the user's hand 506.

In an implementation, the accentuation of the edge 514 of the system UI 510 is dependent on the proximity of the position of the user's hand 506. For example, the portion of the edge 514 may start accentuating when the user's hand 506 reaches the second threshold distance 522 from the portion of the edge 514 of the system UI 510. In response to determining that the position of the user's hand 506 is within the second threshold distance 522 of the edge 514 of the system UI 510, the computing system may generate the second feedback that accentuate at least the portion of the edge 514 of the system UI 510. Further, as the user's hand 506 approaches towards the edge 514 of system UI 510 within the second threshold distance 522, the size of the accentuated portion of edge 514 may increase accordingly. Such second feedback may signify the interaction opportunity of the user 504 with the edge 514 of the system UI 510. At such an instance, the actual interaction between the edge 514 of the system UI 510 and the position of the user's hand 506 is not performed.

In an example, when the position of the user's hand 506 may be at a distance of 5 centimeters (cm) from a right side of the edge 514, a 2 cm portion of the right side of the edge 514 may be accentuated. Moreover, when the position of the user's hand 506 may be at the distance of 1 cm from the right side of the edge 514, a 6 cm portion of the right side of the edge 514 may be accentuated. Thus, the accentuation of the portion of the edge 514 increases around the edge 514, as the distance between the portion of the representation of the user's hand 506 and the portion of the edge 514 of the system UI 510 decreases.

In some implementations, a portion of the representation 516 of the user's hand 506 may also accentuate based on the proximity of the position of the user's hand 506 with the edge 514 within the second threshold distance 522. Furthermore, the second feedback may further include increasing an amount of accentuated portion 516A of at least one of the thumb or the one or more fingers of the representation 516 of the user's hand 506 based on decrease in the distance between the portion of the representation 516 of the user's hand 506 and the edge 514 of the system UI 506. For example, increasing the amount of the accentuation may include increasing the intensity (e.g., increasing an intensity of the color or shading) of the accentuation or increasing an area of the accentuated portion of the thumb or the one or more fingers of the representation 516 of the user's hand 506. Further, accentuation of the portion 516A of the representation 516 of the user's hand 506 may depend on a portion of the representation 516 included in the grab gesture. For example, the user 504 may use the thumb and the index finger to grab the edge 514 of the system UI 510. In such a case, the portion 516A corresponding to the thumb and the index finger in the representation 516 of the user's hand 506 that is in contact with the edge 514 of the system UI 510 may be accentuated (as shown in Figure 8A). In another example, the user 504 may use the thumb, and all four fingers to grab the edge 514 of the system UI 510. In such a case, the portion 516A corresponding to the thumb and the all the four fingers in the representation 516 of the user's hand 506 that is in contact with the edge 514 of the system UI 510 may be accentuated.

Figure 8B is a conceptual diagram 800B representing a more extensive accentuation of the edge 514 and the representation 516A of the user's hand 506 based on grabbing of the edge 514. The conceptual diagram 800B may include the XR environment 502A. The XR environment 502A may include the system UI 510. The system UI 510 may include the edge 514 of the system UI 510. The XR environment 502A may further include the representation 516 of the user's hand 506.

The computing system may be configured to determine that the position of the user's hand 506 may include a gesture that grabs the system UI 510 (such as the edge 514 of the system UI 510). In an example, the position of the user's hand 506 (depicted as the representation 516 of the user's hand 506 in the XR environment 502A) is in contact with the position of the edge 514 of the system UI 510. In response to determining that the position of the user's hand 506 includes the gesture that grabs the system UI 510, the computing system may generate third feedback. For example, the gesture may include grabbing or holding the edge 514 using at least the thumb and the one or more fingers of the user's hand 506. The third feedback may include accentuating at least the portion 516A of the representation 516A of the user's hand 506 that is grabbing the system UI 510. Such third feedback may signify the interaction of the user 504 with the edge 514 of the system UI 510. At such an instance, the actual interaction between the edge 514 of the system UI 510 and the position of the user's hand 506 is performed.

In an implementation, as the distance between the position of the user's hand 506 and the edge 514 of the system UI 510 decreases, the accentuation of at least the thumb and the one or more fingers of the user's hand 506 increases (as explained in Figure 8A). The amount of accentuation on at least the thumb or the one or more fingers of the representation 516 of the user's hand 506 reaches a predefined level based on the determination that the system UI 510 is grabbed by the at least one of the thumb or the one or more fingers of the representation 516 of the user's hand 506. In other words, the amount of accentuation on at least the thumb or the one or more fingers of the representation 516 of the user's hand 506 may be maximum when the user's hand 506 grabs the edge 514 of the system UI 510.

In an implementation, the third feedback may further include accentuating the edge 514 of the system UI 510 more extensively when at least the portion of the representation 516 of the user's hand 506 is grabbing the system UI 510. For instance, the size of the accentuated portion of the edge 514 of the system UI 510 increases as the user's hand 506 approaches towards the system UI 510 (explained, for example, in Figure 8A). The edge 514 of the system UI 510 may be further accentuated based on a determination that the user's hand 506 grabs the edge 514 of the system UI 510. Such third feedback may be utilized by the user 504 as an indication that the system UI 510 is held by the user 506 in the XR environment 502A.

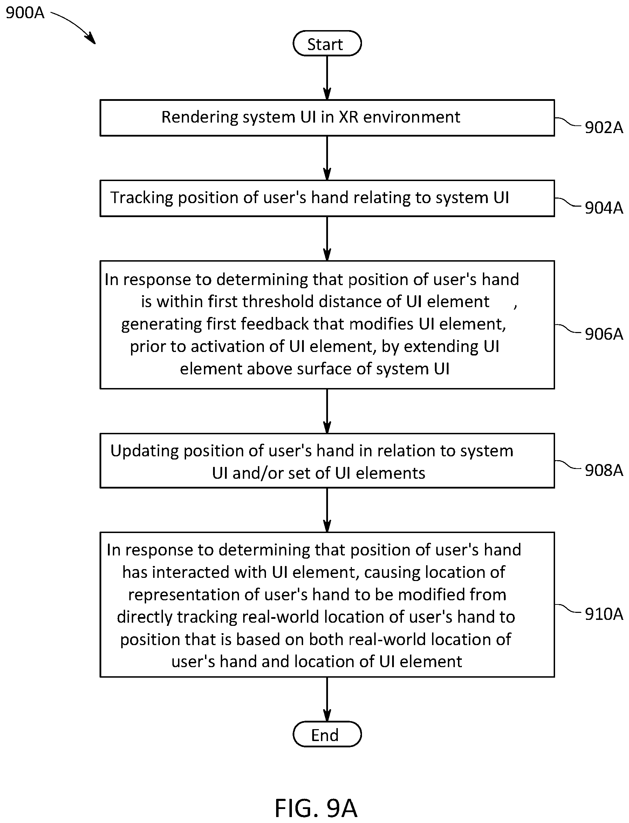

Figure 9A illustrates a flow diagram of a method 900A used in some implementations of the present technology for interaction of the user 504 with the UI element 512A in the XR environment 502A.

In an implementation, the method 900A may be triggered when the computing system and the XR device 508 are connected via the network 330. Once the XR device is activated by the user 504, the computing system may display the XR environment 502A on the XR device 508. Moreover, the computing system may receive an input from the user 504 to render the system UI 510 in the XR environment 502A.

At block 902A, the system UI 510 is rendered in the XR environment 502A. For instance, the system UI 510 may be rendered at a position in the XR environment that is in front of the eye level of the user 504, near where a user's hand is determined to be, attached to another UI element or user part, where the system UI was last shown, etc. The position of the rendered system UI 510 can be set to a preset default position inbuilt in the XR device 508 and/or at a position defined by the user 504. The position of the system UI 510 is set such that it can be reachable by the user 504 and the system UI 510 always lies in front of the eye level of the user 504.

At block 904A, the tracking of the position of the user's hand 506 relating to system UI 510 may be performed. The tracking of the position of the user's hand 506 may be performed based on the positional data that is acquired using plurality of sensors present on the XR device 508. For example, the plurality of sensors may include imaging devices, such as cameras, inertial motion unit (IMU) sensors, light emitting (e.g., infrared) inside-out tracking elements, etc. The position of the representation 516 of the user's hand 506 is updated based on the tracking of the user's hand 506. For example, in a situation when the user 504 may have moved his hands intentionally to touch the UI element 512A, then the position of the representation 516 of the user's hand 506 may also move based on the tracking of the position of the user's hand 506 by the XR device 508.

At block 906A, the interaction opportunity between the position of the representation 516 of the user's hand 506 and the UI element 512A is signified. Here, the computing system may generate first feedback in response to determining that the position of the representation 516 of the user's hand 506 is within the first threshold distance of the UI element 512A. The generated first feedback modifies the UI element 512A, for example, by extending the UI element 512A above the surface of the system UI 510 prior to activation of the UI element 512A.

At block 908A, the position of the user's hand 506 relating to the system UI 510 and/or UI element 512A is updated. The position of the representation 516 of the user's hand 506 is updated based on the positional data of the user's hand 506. The position of the user's hand is updated to signify the interaction between the representation 516 of the user's hand 506 and the system UI 510 or UI element 512A and/or set of the UI elements 512.

At block 910A, in response to determining that the position of the user's hand has interacted with the UI element 512A to signify the interaction with UI element 512A, the computing system causes to modify the location of representation 516 of the user's hand 506 from directly tracking the real-world 506a location of the user's hand 506 to a position that is based on both the real-world 506a location of the user's hand 506 and a location of the UI element 512A. For example, in order to signify the interaction between the position of the user's hand 506 and the UI element 512A, the location of the representation 516 of the user's hand 506 may be same as the location of UI element 512A in the XR environment 502A. For example, the computing system initially matches the representation 516 of the user's hand 506 closely with the real-world position of the user's hand 506. Based on the determination that the position of the user's hand 506 has interacted with the UI element 512A, the representation 516 of the user's hand 506 is attached to the UI element 512A. The attachment is such that when the user's hand 506 moves in the real-world only the threshold amount away from the UI element 512A, the computing system doesn't cause the representation 516 of the user's hand 506 to move off the UI element 512A.

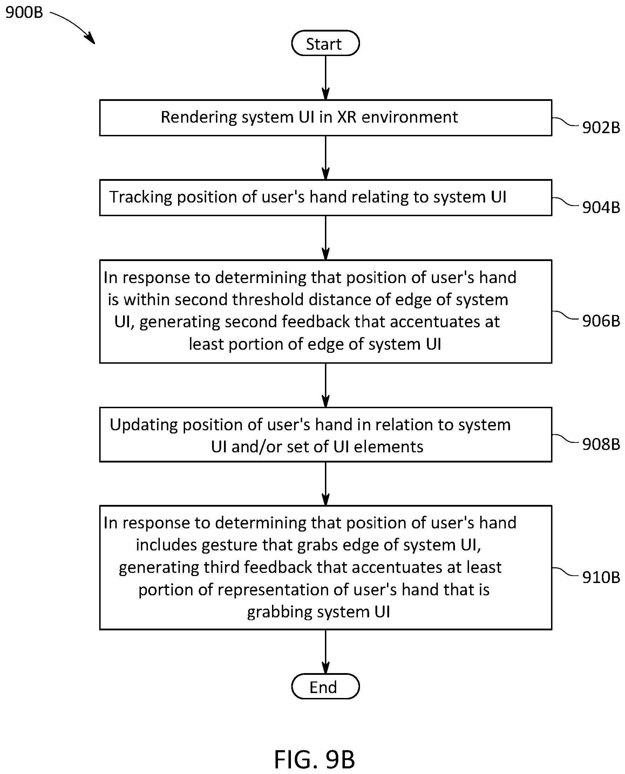

Figure 9B illustrate a flow diagram of a method 900B used in some implementations of the present technology for interaction of the user 504 with the system UI 510 in the XR environment 502A.

In an implementation, the method 900B may be triggered when the computing system and the XR device 508 are connected via the network 330. Once the XR device is activated by the user 504, the computing system may display the XR environment 502A on the XR device 508. Moreover, the computing system may receive an input from the user 504 to render the system UI 510 in the XR environment 502A.

At block 902B, the system UI 510 is rendered in the XR environment 502A. For instance, the system UI 510 may be rendered at a position in the XR environment that is in front of the eye level of the user 504. Further, the block 902B may be performed in a similar manner as block 902A of Figure 9A.

At block 904B, the tracking of the position of the user's hand 506 relating to system UI 510 may be performed. The tracking of the position of the user's hand 506 may be performed based on the positional data that is acquired using plurality of sensors present on the XR device 508. Further, the block 904B may be performed in a similar manner as block 904A of Figure 9A.

At block 906B, the interaction opportunity between the position of the representation 516 of the user's hand 506 and the edge 514 of the system UI 510 is signified. Here the computing system may generate the second feedback in response to determining that the position of the representation 516 of the user's hand 506 is within the second threshold distance 522 of the edge 514 of the system UI 510. The generated second feedback may include accentuation of at least a portion of the edge 514 of the system UI 510. Further, in an embodiment, the accentuated portion of the edge 514 of the system UI 510 may increase as the distance between the representation 516 of the user's hand 506 and the edge 514 of the system 508 decrease.

At block 908B, the position of the user's hand 506 is updated relating to the system UI 510 and/or UI element 512A. For example, more particularly at block 908B the position of the user's hand is updated to signify the interaction between the representation 516 of the user's hand 506 and the system UI 510. Further, the block 908B may be performed in a similar manner as block 908A of Figure 9A.

At block 910B, in response to determining that the position of the user's hand 506 includes a gesture that grabs the edge 514 of the system UI 510 to signify the interaction with the system UI, the computing system may generate third feedback that accentuates at least a portion of the representation of the user's hand 514a that is grabbing system UI 510. For instance, at a time when the grab is performed, the portion of the representation 516 of the user's hand 506 that may be in contact of the system UI 510, that is determined to be making a particular grab gesture (e.g., pinch, closed fist, etc.), and/or that is within the threshold distance from the system UI 510 may be accentuated.

In some implementation the block 906A and the block 906B may be performed together (e.g., as a part of a block 906 -- not depicted in the figures). Further, the block 906A and the block 906B may be performed collectively, e.g., to signify interaction opportunity with the system UI 510 or the UI element 512A, of the set of the UI elements 512. The interaction opportunity with the system UI 510 or the UI element 512A may correspond to a situation where the position of the representation 516 of the user's hand 506 is within the threshold distance from the system UI 510 and/or UI element 512A.

In some implementation, the block 910A and the block 910B may be performed together (e.g., as a part of a block 910 - not depicted in the figures). Further, the block 910A and the block 910B may be performed collectively, e.g., to signify interaction with the system UI 510 or the UI element 512A, of the set of the UI elements 512. The interaction with the system UI 510 or the UI element 512A may correspond to a situation when the representation 516 of the user's hand 506 is interacting with the system UI 510 and/or UI element 512A.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

## Claims

1. A computer implemented method (900A, 900B) for facilitating user interface, UI ,interactions in an artificial reality, XR, environment (502A), the computer implemented method comprising:
rendering a system UI (510) in the XR environment, wherein the system UI comprises a set of UI elements (512);
tracking a position of a user's (504) hand (506) in relation to the system UI (510) and/or the set of UI elements;
signifying an interaction opportunity with the system UI (510) or an UI element (512A), of the set of the UI elements (512), by:
in response to determining that the position of the user's hand (506) is within a second threshold distance (522) of an edge (514) of the system UI (510), generating second feedback that accentuates at least a portion of the edge (514) of the system UI (510);
updating the position of the user's (504) hand (506) in relation to the system UI (510) and/or the set of UI elements (512); and
signifying an interaction with the system UI or the UI element by:
in response to determining that the position of the user's (504) hand (506) includes a gesture that grabs the edge (514) of the system UI (510), generating third feedback that accentuates at least a portion of the representation (516) of the user's hand (506) that is grabbing the system UI (510).

2. The computer implemented method of claim 1, wherein the method further comprises, in response to determining that the position of the user's (504) hand (506) is within a first threshold distance (520) of the UI element (512A), generating first feedback that modifies the UI element, prior to activation of the UI element, by extending the UI element (512A) above a surface of the system UI (510).

3. The computer implemented method of any preceding claim, wherein the method further comprises, in response to determining that the position of the user's (504) hand (506) has interacted with the UI element (512A), causing a location of a representation (516) of the user's hand (506) to be modified from directly tracking the real-world location of the user's hand (506) to being in a position that is based on both the real-world location of the user's hand (506) and a location of the UI element (512A).

4. The computer implemented method of claim 2 or claim 3,
wherein the signifying the interaction opportunity includes the generating the first feedback; and
wherein the first feedback further comprises increasing an amount of the surface of the system UI (510) covered by the UI element (512A) of the set of UI elements (512).

5. The computer implemented method of any preceding claim,
wherein the signifying the interaction includes the causing the location of the representation (516) of the user's (504) hand (506) to be modified; and
wherein the causing the location of the representation of the user's hand to be modified includes, in response to determining that the representation of the user's hand (506) is pressing the UI element (512A) past the surface of the system UI, preventing the UI element from extending below the the surface of the system UI (510); and/ or
wherein, in response to the determining that the position of the user's hand (506) has interacted with the UI element (512A), further accentuating the UI element (512A) by changing a coloring or shading of the UI element.

6. The computer implemented method of any preceding claim,
wherein the UI element (512A) is a button UI element;
wherein the signifying the interaction comprises the causing a location of the representation (516) of the user's (504) hand (506) to be modified;
wherein the method further comprises, in response to determining that the user's hand has A) interacted with the button UI element pushing it down past a first depression threshold and B) then has interacted with the button UI element releasing it up past a second depression threshold, causing activation of the button UI element; and
wherein the first depression threshold is closer to the surface of the system UI than the second depression threshold;
and optionally further, wherein the causing activation of the button UI element includes outputting an audio cue.

7. The computer implemented method of any preceding claim,
wherein the signifying the interaction includes the generating the third feedback; and
wherein the third feedback that accentuates at least the portion of the representation (516) of the user's (504) hand (506) accentuates at least a thumb and one or more fingers of the representation (516) of the user's hand (506) that is grabbing the system UI.

8. A computing system for interacting with a system user interface, UI, in an artificial reality, XR, environment (502A), the computing system comprising:
one or more processors; and
one or more memories storing instructions that, when executed by the one or more processors, cause the computing system to perform a process comprising:
rendering the system UI (510) in the XR environment (502A), wherein the system UI comprises a set of UI elements (512);
tracking a position of a user (504) hand (506) in relation to the system UI (510) and/or the set of UI elements (512);
signifying an interaction opportunity with the system UI (510) or a UI element, of the set of UI elements, by:
in response to determining that the position of the user's (504) hand (506) is within a second threshold distance (522) of an edge (514) of the system UI (510), generating second feedback that accentuates at least a portion of the edge (514) of the system UI (510);
updating the position of the user's hand (506) in relation to the system UI (510) and/or the set of UI elements (512); and
signifying an interaction with the system UI (510) or the UI element (512A) by:
in response to determining that the position of the user's (504) hand (506) includes a gesture that grabs the edge (514) of the system UI (510), generating third feedback that accentuates at least a portion of the representation (516) of the user's hand (506) that is grabbing system UI (510).

9. The computing system of claim 8, wherein the signifying the interaction with the system UI (510) or the UI element (512A) further comprises, in response to determining that the position of the user's (504) hand (506) is within a first threshold distance (520) of the UI element, generating first feedback that modifies the UI element, prior to activation of the UI element, by extending the UI element above a surface of the system UI (510).

10. The computing system of claim 8 or 9, wherein the signifying the interaction with the system UI (510) or the UI element (512A) further comprises, in response to determining that the position of the user's (504) hand (506) has interacted with the UI element, causing a location of a representation (516) of the user's hand to be modified from directly tracking the real-world location of the user's hand (506) to being in a position that is based on both the real-world location of the user's hand (506) and a location of the UI element.

11. The computing system of one of claims 8 to 10, wherein the signifying the interaction with the system UI (510) or the UI element (512A) further comprises the generating the third feedback by accentuating the edge (514) of the system UI when at least the portion of the representation (516) of the user's (504) hand (506) is grabbing the system Ul; and optionally further
wherein the accentuation, of the portion of the edge (514) of the system UI (510), A) began when the representation (516) of the user's hand was within a threshold distance of the edge of the system UI (510) and B) increased in an amount of the edge that was accentuated as the distance between the portion of the representation (516) of the user's hand and the portion of the edge of the system UI (510) decreased.

12. The computing system of one of claims 8 to 11,
wherein the signifying the interaction opportunity comprises the generating the second feedback; and
wherein the second feedback further comprises accentuating, based on a determined decrease in the distance between the portion of the representation (516) of the user's (504) hand (506) and the system UI (510), a portion of the representation (516) of the user's hand including at least a thumb and one or more fingers on the representation of the user's hand.

13. The computing system of one of claims 8 to 12,
wherein the tracking of the position of the user's (504) hand (506) in relation to the system UI (510) and/or the set of UI elements (512) is based on at least one of: one or more sensors that detect gestures of the user's hand in real-time or one or more controllers (270) associated with the XR device (508), and
wherein the location of the representation (516) of the user's hand (506) corresponds to the location of the user's hand in a real-world environment (502).

14. The computing system of one of claims 8 to 13,
wherein the signifying the interaction opportunity comprises the generating the first feedback; and
wherein the first feedback further comprises increasing an amount of the surface of the system UI (510) covered by the UI element (512A) of the set of UI elements (512).

15. The computing system of one of claims 8 to 14,
wherein the signifying the interaction includes the causing the location of the representation (516) of the user's (504) hand (506) to be modified; and
wherein the causing the location of the representation of the user's hand to be modified includes, in response to determining that the representation of the user's hand is pressing the UI element (512A) past the surface of the system UI (510), preventing the UI element (512A) from extending below the the surface of the system UI (510).

16. The computing system of one of claims 8 to 15,
wherein the signifying the interaction includes the causing the location of the representation (516) of the user's (504) hand (506) to be modified; and
wherein, in response to the determining that the position of the user's hand (506) has interacted with the UI element, further accentuating the UI element (512A) by changing a coloring or shading of the UI element.

17. The computing system of one of claims 8 to 16,
wherein the UI element (512A) is a button UI element;
wherein the signifying the interaction comprises the causing a location of the representation (516) of the user's (504) hand (506) to be modified;
wherein the process further comprises, in response to determining that the user's hand (506) has A) interacted with the button UI element (512A) pushing it down past a first depression threshold and B) then has interacted with the button UI element releasing it up past a second depression threshold, causing activation of the button UI element; and
wherein the first depression threshold is closer to the surface of the system UI than the second depression threshold;
and optionally further, wherein the causing activation of the button UI element includes outputting an audio cue.

18. The computing system of one of claims 8 to 17,
wherein the signifying the interaction includes the generating the third feedback; and
wherein the third feedback that accentuates at least the portion of the representation (516) of the user's (504) hand (506) accentuates at least a thumb and one or more fingers of the representation of the user's hand that is grabbing the system UI.

19. A computer-readable storage medium storing instructions that, when executed by a computing system (100), cause the computing system (100) to perform a process for interacting with a system user interface, UI, in an artificial reality, XR, environment (502A), the process comprising the computer implemented method of any one of claims 1 to 7.

## Patentansprüche

1. Ein computerimplementiertes Verfahren (900A, 900B) zum Erleichtern von Interaktionen einer Benutzerschnittstelle, UI, in einer Umgebung (502A) einer künstlichen Realität, XR, wobei das computerimplementierte Verfahren Folgendes beinhaltet:
Rendern einer System-UI (510) in der XR-Umgebung, wobei die System-Ul einen Satz von UI-Elementen (512) beinhaltet;
Verfolgen einer Position einer Hand (506) eines Benutzers (504) in Bezug auf die System-Ul (510) und/oder den Satz von Ul-Elementen;
Kennzeichnen einer Interaktionsmöglichkeit mit der System-Ul (510) oder einem UI-Element (512A) des Satzes der UI-Elemente (512) durch:
als Reaktion auf das Bestimmen, dass die Position der Hand (506) des Benutzers innerhalb eines zweiten Schwellenabstands (522) von einem Rand (514) der System-UI (510) liegt, Erzeugen einer zweiten Rückmeldung, die mindestens einen Abschnitt des Rands (514) der System-Ul (510) hervorhebt;
Aktualisieren der Position der Hand (506) des Benutzers (504) in Bezug auf die System-Ul (510) und/oder den Satz von UI-Elementen (512); und
Kennzeichnen einer Interaktion mit der System-Ul oder dem Ul-Element durch:
als Reaktion auf das Bestimmen, dass die Position der Hand (506) des Benutzers (504) eine Geste umfasst, die den Rand (514) der System-UI (510) greift, Erzeugen einer dritten Rückmeldung, die mindestens einen Abschnitt der Darstellung (516) der Hand (506) des Benutzers hervorhebt, die die System-Ul (510) greift.

2. Computerimplementiertes Verfahren gemäß Anspruch 1, wobei das Verfahren ferner als Reaktion auf das Bestimmen, dass die Position der Hand (506) des Benutzers (504) innerhalb eines ersten Schwellenabstands (520) von dem Ul-Element (512A) liegt, das Erzeugen einer ersten Rückmeldung beinhaltet, die das Ul-Element vor der Aktivierung des UI-Elements modifiziert, indem das UI-Element (512A) über einer Oberfläche der System-Ul (510) erweitert wird.

3. Computerimplementiertes Verfahren gemäß einem der vorhergehenden Ansprüche, wobei das Verfahren ferner als Reaktion auf das Bestimmen, dass die Position der Hand (506) des Benutzers (504) mit dem Ul-Element (512A) interagiert hat, das Bewirken beinhaltet, dass ein Ort einer Darstellung (516) der Hand (506) des Benutzers vom direkten Verfolgen des realen Orts der Hand (506) des Benutzers zu einer Position, die sowohl auf dem realen Ort der Hand (506) des Benutzers als auch auf einem Ort des UI-Elements (512A) basiert, modifiziert wird.

4. Computerimplementiertes Verfahren gemäß Anspruch 2 oder Anspruch 3,
wobei das Kennzeichnen der Interaktionsmöglichkeit das Erzeugen der ersten Rückmeldung umfasst; und
wobei die erste Rückmeldung ferner das Erhöhen eines Anteils der Oberfläche der System-UI (510), die von dem Ul-Element (512A) des Satzes von Ul-Elementen (512) bedeckt ist, beinhaltet.

5. Computerimplementiertes Verfahren gemäß einem der vorhergehenden Ansprüche, wobei das Kennzeichnen der Interaktion das Bewirken, dass der Ort der Darstellung (516) der Hand (506) des Benutzers (504) modifiziert wird, umfasst; und
wobei das Bewirken, dass der Ort der Darstellung der Hand des Benutzers modifiziert wird, als Reaktion auf das Bestimmen, dass die Darstellung der Hand (506) des Benutzers das UI-Element (512A) über die Oberfläche der System-Ul hinaus drückt, das Verhindern, dass sich das Ul-Element unter die Oberfläche der System-Ul (510) erstreckt, umfasst; und/oder
wobei als Reaktion auf das Bestimmen, dass die Position der Hand (506) des Benutzers mit dem UI-Element (512A) interagiert hat, das Ul-Element (512A) ferner durch Ändern einer Färbung oder Schattierung des UI-Elements hervorgehoben wird.

6. Computerimplementiertes Verfahren gemäß einem der vorhergehenden Ansprüche, wobei das Ul-Element (512A) ein Tasten-Ul-Element ist;
wobei das Kennzeichnen der Interaktion das Bewirken, dass ein Ort der Darstellung (516) der Hand (506) des Benutzers (504) modifiziert wird, beinhaltet;
wobei das Verfahren ferner als Reaktion auf das Bestimmen, dass die Hand des Benutzers A) mit dem Tasten-UI-Element interagiert hat, das sie nach unten über einen ersten Niederdrückschwellenwert hinaus drückt, und B) dann mit dem Tasten-UI-Element interagiert hat, das sie nach oben über einen zweiten Niederdrückschwellenwert hinaus freigibt, das Bewirken der Aktivierung des Tasten-Ul-Elements beinhaltet; und
wobei der erste Niederdrückschwellenwert näher an der Oberfläche der System-Ul liegt als der zweite Niederdrückschwellenwert;
und wobei das Bewirken der Aktivierung des Tasten-Ul-Elements optional ferner das Ausgeben eines Audiohinweises umfasst.

7. Computerimplementiertes Verfahren gemäß einem der vorhergehenden Ansprüche, wobei das Kennzeichnen der Interaktion das Erzeugen der dritten Rückmeldung umfasst; und
wobei die dritte Rückmeldung, die mindestens den Abschnitt der Darstellung (516) der Hand (506) des Benutzers (504) hervorhebt, mindestens einen Daumen und einen oder mehrere Finger der Darstellung (516) der Hand (506) des Benutzers hervorhebt, die die System-UI greift.

8. Ein Computersystem zum Interagieren mit einer Systembenutzerschnittstelle, UI, in einer Umgebung (502A) einer künstlichen Realität, XR, wobei das Computersystem Folgendes beinhaltet:
einen oder mehrere Prozessoren; und
einen oder mehrere Speicher, die Anweisungen speichern, die bei Ausführung durch den einen oder die mehreren Prozessoren bewirken, dass das Computersystem einen Prozess durchführt, der Folgendes beinhaltet:
Rendern der System-UI (510) in der XR-Umgebung (502A), wobei die System-UI einen Satz von Ul-Elementen (512) beinhaltet;
Verfolgen einer Position einer Hand (506) eines Benutzers (504) in Bezug auf die System-Ul (510) und/oder den Satz von Ul-Elementen (512);
Kennzeichnen einer Interaktionsmöglichkeit mit der System-Ul (510) oder einem UI-Element des Satzes von Ul-Elementen durch:
als Reaktion auf das Bestimmen, dass die Position der Hand (506) des Benutzers (504) innerhalb eines zweiten Schwellenabstands (522) von einem Rand (514) der System-Ul (510) liegt, Erzeugen einer zweiten Rückmeldung, die mindestens einen Abschnitt des Rands (514) der System-Ul (510) hervorhebt;
Aktualisieren der Position der Hand (506) des Benutzers in Bezug auf die System-Ul (510) und/oder den Satz von Ul-Elementen (512); und
Kennzeichnen einer Interaktion mit der System-Ul (510) oder dem Ul-Element (512A) durch:
als Reaktion auf das Bestimmen, dass die Position der Hand (506) des Benutzers (504) eine Geste umfasst, die den Rand (514) der System-Ul (510) greift, Erzeugen einer dritten Rückmeldung, die mindestens einen Abschnitt der Darstellung (516) der Hand (506) des Benutzers hervorhebt, die die System-UI (510) greift.

9. Computersystem gemäß Anspruch 8, wobei das Kennzeichnen der Interaktion mit der System-Ul (510) oder dem Ul-Element (512A) ferner als Reaktion auf das Bestimmen, dass die Position der Hand (506) des Benutzers (504) innerhalb eines ersten Schwellenabstands (520) von dem Ul-Element liegt, das Erzeugen einer ersten Rückmeldung beinhaltet, die das UI-Element vor der Aktivierung des Ul-Elements modifiziert, indem das UI-Element über einer Oberfläche der System-Ul (510) erweitert wird.

10. Computersystem gemäß Anspruch 8 oder 9, wobei das Kennzeichnen der Interaktion mit der System-Ul (510) oder dem UI-Element (512A) ferner als Reaktion auf das Bestimmen, dass die Position der Hand (506) des Benutzers (504) mit dem UI-Element interagiert hat, das Bewirken beinhaltet, dass ein Ort einer Darstellung (516) der Hand des Benutzers vom direkten Verfolgen des realen Orts der Hand (506) des Benutzers zu einer Position, die sowohl auf dem realen Ort der Hand (506) des Benutzers als auch auf einem Ort des UI-Elements basiert, modifiziert wird.

11. Computersystem gemäß einem der Ansprüche 8 bis 10, wobei das Kennzeichnen der Interaktion mit der System-Ul (510) oder dem Ul-Element (512A) ferner das Erzeugen der dritten Rückmeldung durch Hervorheben des Rands (514) der System-UI, wenn mindestens der Abschnitt der Darstellung (516) der Hand (506) des Benutzers (504) die System-Ul greift, beinhaltet; und optional ferner
wobei die Hervorhebung des Abschnitts des Rands (514) der System-UI (510) A) begann, als die Darstellung (516) der Hand des Benutzers innerhalb eines Schwellenabstands von dem Rand der System-Ul (510) lag, und B) in einem Anteil des Rands, der hervorgehoben wurde, als der Abstand zwischen dem Abschnitt der Darstellung (516) der Hand des Benutzers und dem Abschnitt des Rands der System-UI (510) abnahm, zunahm.

12. Computersystem gemäß einem der Ansprüche 8 bis 11,
wobei das Kennzeichnen der Interaktionsmöglichkeit das Erzeugen der zweiten Rückmeldung beinhaltet; und
wobei die zweite Rückmeldung ferner das Hervorheben, basierend auf einer bestimmten Abnahme des Abstands zwischen dem Abschnitt der Darstellung (516) der Hand (506) des Benutzers (504) und der System-Ul (510), eines Abschnitts der Darstellung (516) der Hand des Benutzers, der mindestens einen Daumen und einen oder mehrere Finger der Darstellung der Hand des Benutzers umfasst, beinhaltet.

13. Computersystem gemäß einem der Ansprüche 8 bis 12,
wobei das Verfolgen der Position der Hand (506) des Benutzers (504) in Bezug auf die System-Ul (510) und/oder den Satz von Ul-Elementen (512) auf mindestens einem von Folgendem basiert: einem oder mehreren Sensoren, die Gesten der Hand des Benutzers in Echtzeit detektieren, oder einer oder mehreren Steuerungen (270), die mit der XR-Vorrichtung (508) assoziiert sind, und
wobei der Ort der Darstellung (516) der Hand (506) des Benutzers dem Ort der Hand des Benutzers in einer realen Umgebung (502) entspricht.

14. Computersystem gemäß einem der Ansprüche 8 bis 13,
wobei das Kennzeichnen der Interaktionsmöglichkeit das Erzeugen der ersten Rückmeldung beinhaltet; und
wobei die erste Rückmeldung ferner das Erhöhen eines Anteils der Oberfläche der System-UI (510), die von dem Ul-Element (512A) des Satzes von Ul-Elementen (512) bedeckt ist, beinhaltet.

15. Computersystem gemäß einem der Ansprüche 8 bis 14,
wobei das Kennzeichnen der Interaktion das Bewirken, dass der Ort der Darstellung (516) der Hand (506) des Benutzers (504) modifiziert wird, umfasst; und
wobei das Bewirken, dass der Ort der Darstellung der Hand des Benutzers modifiziert wird, als Reaktion auf das Bestimmen, dass die Darstellung der Hand des Benutzers das UI-Element (512A) über die Oberfläche der System-Ul (510) hinaus drückt, das Verhindern, dass sich das Ul-Element (512A) unter die Oberfläche der System-UI (510) erstreckt, umfasst.

16. Computersystem gemäß einem der Ansprüche 8 bis 15,
wobei das Kennzeichnen der Interaktion das Bewirken, dass der Ort der Darstellung (516) der Hand (506) des Benutzers (504) modifiziert wird, umfasst; und
wobei als Reaktion auf das Bestimmen, dass die Position der Hand (506) des Benutzers mit dem UI-Element interagiert hat, das Ul-Element (512A) ferner durch Ändern einer Färbung oder Schattierung des Ul-Elements hervorgehoben wird.

17. Computersystem gemäß einem der Ansprüche 8 bis 16,
wobei das Ul-Element (512A) ein Tasten-Ul-Element ist;
wobei das Kennzeichnen der Interaktion das Bewirken, dass ein Ort der Darstellung (516) der Hand (506) des Benutzers (504) modifiziert wird, beinhaltet;
wobei der Prozess ferner als Reaktion auf das Bestimmen, dass die Hand (506) des Benutzers A) mit dem Tasten-UI-Element (512A) interagiert hat, das sie nach unten über einen ersten Niederdrückschwellenwert hinaus drückt, und B) dann mit dem Tasten-Ul-Element interagiert hat, das sie nach oben über einen zweiten Niederdrückschwellenwert hinaus freigibt, das Bewirken der Aktivierung des Tasten-Ul-Elements beinhaltet; und
wobei der erste Niederdrückschwellenwert näher an der Oberfläche der System-Ul liegt als der zweite Niederdrückschwellenwert;
und wobei das Bewirken der Aktivierung des Tasten-Ul-Elements optional ferner das Ausgeben eines Audiohinweises umfasst.

18. Computersystem gemäß einem der Ansprüche 8 bis 17,
wobei das Kennzeichnen der Interaktion das Erzeugen der dritten Rückmeldung umfasst; und
wobei die dritte Rückmeldung, die mindestens den Abschnitt der Darstellung (516) der Hand (506) des Benutzers (504) hervorhebt, mindestens einen Daumen und einen oder mehrere Finger der Darstellung der Hand des Benutzers hervorhebt, die die System-Ul greift.

19. Ein computerlesbares Speichermedium, das Anweisungen speichert, die bei Ausführung durch ein Computersystem (100) bewirken, dass das Computersystem (100) einen Prozess zum Interagieren mit einer Systembenutzerschnittstelle, UI, in einer Umgebung (502A) einer künstlichen Realität, XR, durchführt, wobei der Prozess das computerimplementierte Verfahren gemäß einem der Ansprüche 1 bis 7 beinhaltet.

## Revendications

1. Un procédé mis en œuvre par ordinateur (900A, 900B) pour faciliter des interactions d'interface utilisateur, UI (*user interface*), dans un environnement de réalité artificielle, XR, (502A), le procédé mis en œuvre par ordinateur comprenant :
le rendu d'une UI de système (510) dans l'environnement XR, où l'UI de système comprend un ensemble d'éléments d'UI (512) ;
le suivi d'une position de la main (506) d'un utilisateur (504) par rapport à l'UI de système (510) et/ou à l'ensemble d'éléments d'UI ;
la signification d'une opportunité d'interaction avec l'UI de système (510) ou un élément d'UI (512A), de l'ensemble d'éléments d'UI (512), par :
en réponse à la détermination que la position de la main (506) de l'utilisateur est à moins d'une deuxième distance seuil (522) d'un bord (514) de l'UI de système (510), la génération d'une deuxième rétroaction qui accentue au moins une portion du bord (514) de l'UI de système (510) ;
la mise à jour de la position de la main (506) de l'utilisateur (504) par rapport à l'UI de système (510) et/ou à l'ensemble d'éléments d'UI (512) ; et
la signification d'une interaction avec l'UI de système ou l'élément d'UI par :
en réponse à la détermination que la position de la main (506) de l'utilisateur (504) inclut un geste qui saisit le bord (514) de l'UI de système (510), la génération d'une troisième rétroaction qui accentue au moins une portion de la représentation (516) de la main (506) de l'utilisateur qui est en train de saisir l'UI de système (510).

2. Le procédé mis en œuvre par ordinateur de la revendication 1, où le procédé comprend en outre, en réponse à la détermination que la position de la main (506) de l'utilisateur (504) est à moins d'une première distance seuil (520) de l'élément d'UI (512A), la génération d'une première rétroaction qui modifie l'élément d'UI, avant l'activation de l'élément d'UI, en étendant l'élément d'UI (512A) au-dessus d'une surface de l'UI de système (510).

3. Le procédé mis en œuvre par ordinateur de n'importe quelle revendication précédente, où le procédé comprend en outre, en réponse à la détermination que la position de la main (506) de l'utilisateur (504) a interagi avec l'élément d'UI (512A), l'occasionnement de la modification d'un emplacement d'une représentation (516) de la main (506) de l'utilisateur d'un suivi direct de l'emplacement dans le monde réel de la main (506) de l'utilisateur à un état dans une position qui est basée à la fois sur l'emplacement dans le monde réel de la main (506) de l'utilisateur et un emplacement de l'élément d'UI (512A).

4. Le procédé mis en œuvre par ordinateur de la revendication 2 ou de la revendication 3,
où la signification de l'opportunité d'interaction inclut la génération de la première rétroaction ; et
où la première rétroaction comprend en outre l'augmentation d'une quantité de la surface de l'UI de système (510) couverte par l'élément d'UI (512A) de l'ensemble d'éléments d'UI (512).

5. Le procédé mis en œuvre par ordinateur de n'importe quelle revendication précédente,
où la signification de l'interaction inclut l'occasionnement de la modification de l'emplacement de la représentation (516) de la main (506) de l'utilisateur (504) ; et
où l'occasionnement de la modification de l'emplacement de la représentation de la main de l'utilisateur inclut, en réponse à la détermination que la représentation de la main (506) de l'utilisateur est en train d'enfoncer l'élément d'UI (512A) au-delà de la surface de l'UI de système, l'empêchement de l'élément d'UI de s'étendre au-dessous de la surface de l'UI de système (510) ; et/ou
où, en réponse à la détermination que la position de la main (506) de l'utilisateur a interagi avec l'élément d'UI (512A), l'accentuation plus avant de l'élément d'UI (512A) en changeant une coloration ou un ombrage de l'élément d'UI.

6. Le procédé mis en œuvre par ordinateur de n'importe quelle revendication précédente,
où l'élément d'UI (512A) est un élément d'UI à boutons ;
où la signification de l'interaction comprend l'occasionnement de la modification d'un emplacement de la représentation (516) de la main (506) de l'utilisateur (504) ;
où le procédé comprend en outre, en réponse à la détermination que la main de l'utilisateur a A) interagi avec l'élément d'UI à boutons, le poussant pour qu'il descende au-delà d'un premier seuil d'enfoncement, et B) a ensuite interagi avec l'élément d'UI à boutons, le relâchant pour qu'il remonte au-delà d'un deuxième seuil d'enfoncement, l'occasionnement de l'activation de l'élément d'UI à boutons ; et
où le premier seuil d'enfoncement est plus proche de la surface de l'UI de système que le deuxième seuil d'enfoncement ;
et facultativement en outre, où l'occasionnement de l'activation de l'élément d'UI à boutons inclut la production en sortie d'un repère audio.

7. Le procédé mis en œuvre par ordinateur de n'importe quelle revendication précédente,
où la signification de l'interaction inclut la génération de la troisième rétroaction ; et
où la troisième rétroaction qui accentue au moins la portion de la représentation (516) de la main (506) de l'utilisateur (504) accentue au moins un pouce et un ou plusieurs doigts de la représentation (516) de la main (506) de l'utilisateur qui est en train de saisir l'UI de système.

8. Un système informatique pour interagir avec une interface utilisateur, UI, de système dans un environnement de réalité artificielle, XR, (502A), le système informatique comprenant :
un ou plusieurs processeurs ; et
une ou plusieurs mémoires stockant des instructions qui, lorsqu'elles sont exécutées par les un ou plusieurs processeurs, amènent le système informatique à effectuer un processus comprenant :
le rendu de l'UI de système (510) dans l'environnement XR (502A), où l'UI de système comprend un ensemble d'éléments d'UI (512) ;
le suivi d'une position d'une main (506) d'utilisateur (504) par rapport à l'UI de système (510) et/ou à l'ensemble d'éléments d'UI (512) ;
la signification d'une opportunité d'interaction avec l'UI de système (510) ou un élément d'UI, de l'ensemble d'éléments d'UI, par :
en réponse à la détermination que la position de la main (506) de l'utilisateur (504) est à moins d'une deuxième distance seuil (522) d'un bord (514) de l'UI de système (510), la génération d'une deuxième rétroaction qui accentue au moins une portion du bord (514) de l'UI de système (510) ;
la mise à jour de la position de la main (506) de l'utilisateur par rapport à l'UI de système (510) et/ou à l'ensemble d'éléments d'UI (512) ; et
la signification d'une interaction avec l'UI de système (510) ou l'élément d'UI (512A) par :
en réponse à la détermination que la position de la main (506) de l'utilisateur (504) inclut un geste qui saisit le bord (514) de l'UI de système (510), la génération d'une troisième rétroaction qui accentue au moins une portion de la représentation (516) de la main (506) de l'utilisateur qui est en train de saisir l'UI de système (510).

9. Le système informatique de la revendication 8, où la signification de l'interaction avec l'UI de système (510) ou l'élément d'UI (512A) comprend en outre, en réponse à la détermination que la position de la main (506) de l'utilisateur (504) est à moins d'une première distance seuil (520) de l'élément d'UI, la génération d'une première rétroaction qui modifie l'élément d'UI, avant l'activation de l'élément d'UI, en étendant l'élément d'UI au-dessus d'une surface de l'UI de système (510).

10. Le système informatique de la revendication 8 ou de la revendication 9, où la signification de l'interaction avec l'UI de système (510) ou l'élément d'UI (512A) comprend en outre, en réponse à la détermination que la position de la main (506) de l'utilisateur (504) a interagi avec l'élément d'UI, l'occasionnement de la modification d'un emplacement d'une représentation (516) de la main de l'utilisateur du suivi direct de l'emplacement dans le monde réel de la main (506) de l'utilisateur à l'état dans une position qui est basée à la fois sur l'emplacement dans le monde réel de la main (506) de l'utilisateur et un emplacement de l'élément d'UI.

11. Le système informatique de l'une des revendications 8 à 10, où la signification de l'interaction avec l'UI de système (510) ou l'élément d'UI (512A) comprend en outre la génération de la troisième rétroaction en accentuant le bord (514) de l'UI de système lorsqu'au moins la portion de la représentation (516) de la main (506) de l'utilisateur (504) est en train de saisir l'UI de système ; et facultativement en outre
où l'accentuation, de la portion du bord (514) de l'UI de système (510), A) a commencé lorsque la représentation (516) de la main de l'utilisateur était à moins d'une distance seuil du bord de l'UI de système (510) et B) a augmenté d'une quantité du bord qui a été accentué à mesure que la distance entre la portion de la représentation (516) de la main de l'utilisateur et la portion du bord de l'UI de système (510) a diminué.

12. Le système informatique de l'une des revendications 8 à 11,
où la signification de l'opportunité d'interaction comprend la génération de la deuxième rétroaction ; et
où la deuxième rétroaction comprend en outre l'accentuation, sur la base d'une diminution déterminée de la distance entre la portion de la représentation (516) de la main (506) de l'utilisateur (504) et l'UI de système (510), d'une portion de la représentation (516) de la main de l'utilisateur incluant au moins un pouce et un ou plusieurs doigts sur la représentation de la main de l'utilisateur.

13. Le système informatique de l'une des revendications 8 à 12,
où le suivi de la position de la main (506) de l'utilisateur (504) par rapport à l'UI de système (510) et/ou à l'ensemble d'éléments d'UI (512) est basé sur au moins : un ou plusieurs capteurs qui détectent des gestes de la main de l'utilisateur en temps réel et/ou un ou plusieurs organes de commande (270) associés au dispositif XR (508), et
où l'emplacement de la représentation (516) de la main (506) de l'utilisateur correspond à l'emplacement de la main de l'utilisateur dans un environnement du monde réel (502).

14. Le système informatique de l'une des revendications 8 à 13,
où la signification de l'opportunité d'interaction comprend la génération de la première rétroaction ; et
où la première rétroaction comprend en outre l'augmentation d'une quantité de la surface de l'UI de système (510) couverte par l'élément d'UI (512A) de l'ensemble d'éléments d'UI (512).

15. Le système informatique de l'une des revendications 8 à 14,
où la signification de l'interaction inclut l'occasionnement de la modification de l'emplacement de la représentation (516) de la main (506) de l'utilisateur (504) ; et
où l'occasionnement de la modification de l'emplacement de la représentation de la main de l'utilisateur inclut, en réponse à la détermination que la représentation de la main de l'utilisateur est en train d'enfoncer l'élément d'UI (512A) au-delà de la surface de l'UI de système (510), l'empêchement de l'extension de l'élément d'UI (512A) au-dessous de la surface de l'UI de système (510).

16. Le système informatique de l'une des revendications 8 à 15,
où la signification de l'interaction inclut l'occasionnement de la modification de l'emplacement de la représentation (516) de la main (506) de l'utilisateur (504) ; et
où, en réponse à la détermination que la position de la main (506) de l'utilisateur a interagi avec l'élément d'UI, l'accentuation plus avant de l'élément d'UI (512A) en changeant une coloration ou un ombrage de l'élément d'UI.

17. Le système informatique de l'une des revendications 8 à 16,
où l'élément d'UI (512A) est un élément d'UI à boutons ;
où la signification de l'interaction comprend l'occasionnement de la modification d'un emplacement de la représentation (516) de la main (506) de l'utilisateur (504) ;
où le processus comprend en outre, en réponse à la détermination que la main (506) de l'utilisateur a A) interagi avec l'élément d'UI à boutons (512A), le poussant pour qu'il descende au-delà d'un premier seuil d'enfoncement, et B) a ensuite interagi avec l'élément d'UI à boutons, le relâchant pour qu'il remonte au-delà d'un deuxième seuil d'enfoncement, l'occasionnement de l'activation de l'élément d'UI à boutons ; et
où le premier seuil d'enfoncement est plus proche de la surface de l'UI de système que le deuxième seuil d'enfoncement ;
et facultativement en outre, où l'occasionnement de l'activation de l'élément d'UI à boutons inclut la production en sortie d'un repère audio.

18. Le système informatique de l'une des revendications 8 à 17,
où la signification de l'interaction inclut la génération de la troisième rétroaction ; et
où la troisième rétroaction qui accentue au moins la portion de la représentation (516) de la main (506) de l'utilisateur (504) accentue au moins un pouce et un ou plusieurs doigts de la représentation de la main de l'utilisateur qui est en train de saisir l'UI de système.

19. Un support de stockage lisible par ordinateur stockant des instructions qui, lorsqu'elles sont exécutées par un système informatique (100), amènent le système informatique (100) à effectuer un processus pour interagir avec une interface utilisateur, UI, de système dans un environnement de réalité artificielle, XR, (502A), le processus comprenant le procédé mis en œuvre par ordinateur de l'une quelconque des revendications 1 à 7.
